# EUROPÄISCHE PATENTSCHRIFT

(11) **EP 2 684 472 B1**
(45) Veröffentlichungstag und Bekanntmachung des Hinweises auf die Patenterteilung: **10.06.2020**
(21) Anmeldenummer: 13175936.7
(22) Anmeldetag: 10.07.2013
(51) Int. Cl.: A24C 5/32, G05B 13/02, A24C 5/14, A24D 3/02, A24C 5/34

(54) **VERFAHREN ZUM STEUERN EINER MASCHINENKOMBINATION UND/ODER EINER MASCHINE ZUR VERARBEITUNG VON STABFÖRMIGEN ARTIKELN DER TABAK VERARBEITENDEN INDUSTRIE SOWIE EINE MASCHINENVORRICHTUNG DAFÜR**
METHOD FOR CONTROLLING A MACHINE COMBINATION AND/OR A MACHINE FOR PROCESSING ROD-SHAPED ARTICLES FROM THE TOBACCO PROCESSING INDUSTRY AND A MACHINE APPARATUS THEREFOR
PROCÉDÉ DE COMMANDE D'UNE COMBINAISON DE MACHINES ET/OU D'UNE MACHINE POUR LE TRAITEMENT D'ARTICLES EN FORME DE TIGE DE L'INDUSTRIE DE TRAITEMENT DU TABAC ET DISPOSITIF DE MACHINE CORRESPONDANT

(30) Priorität: 10.07.2012 DE 102012106180
(43) Veröffentlichungstag der Anmeldung: 15.01.2014
(73) Patentinhaber: Hauni Maschinenbau GmbH, 21033 Hamburg (DE)
(72) Erfinder: Heikens, Ralf, 21039 Börnsen (DE); Eckroth, Andreas, 21516 Müssen (DE)
(74) Vertreter: Stork Bamberger Patentanwälte PartmbB

(56) Entgegenhaltungen:
- EP-A1- 1 346 812
- EP-A1- 2 127 875
- EP-A2- 0 237 288

## Beschreibung

Die Erfindung betrifft ein Verfahren zum Steuern einer Maschinenkombination und/oder einer Maschine zur Herstellung von stabförmigen Artikeln der Tabak verarbeitenden Industrie, umfassend die Schritte: Fördern der Artikel mittels eines Förderers der Maschinenkombination und/oder der Maschine, thermisches oder pneumatisches Einwirken auf die geförderten Artikel mittels einer Wirkeinheit der Maschinenkombination und/oder der Maschine, wobei die Wirkeinheit dazu in thermische bzw. pneumatische Wirkverbindung mit dem mindestens einen Artikel gebracht wird, und Steuern der Wirkeinheit mittels einer Steuerungseinheit der Maschinenkombination und/oder der Maschine. Unter der Maschine wird dabei eine Maschine als solche und/oder mindestens eine Maschine einer Maschinenkombination von mehreren Maschinen verstanden, so dass in diesem Zusammenhang im Folgenden der Begriff "Maschine" verwendet wird. Des Weiteren betrifft die Erfindung eine Maschinenkombination zur Herstellung von stabförmigen Artikeln der Tabak verarbeitenden Industrie, umfassend eine Strangmaschine, die eine Zuführeinheit zum Zuführen eines Artikelfüllmaterials, eine weitere Zuführeinheit zum Zuführen eines Artikelhüllmaterials, eine Beleimungseinrichtung zum Auftragen von Leim auf das Artikelhüllmaterial einer Strangformeinrichtung bzw. ein Format zum Umlegen des Artikelhüllmaterials um das Artikelfüllmaterial und eine Heiz- und/oder Kühleinrichtung zum Trocknen und/oder Aushärten des aufgetragenen Leims und als Förderer des Artikel ein Formatband zum Fördern des beleimten Artikelhüllmaterials zusammen mit dem Artikelfüllmaterial aufweist, eine umlaufende Übergabevorrichtung, die eine Unterdruckversorgung und mindestens ein Förderelement zum Aufnehmen von längsaxial geförderten Artikeln und zum Abgeben der umlaufenden Artikel an ein queraxial abförderndes Förderelement bzw. einen Querförderer, oder umgekehrt, aufweist, wobei jedes Förderelement Aufnahmen mit Saugöffnungen zum Aufnehmen der stabförmigen Artikel aufweist und die Unterdruckversorgung zum Erzeugen des zum Halten der stabförmigen Artikel erforderliche Unterdrucks eingerichtet und ausgebildet ist, und/oder einer Querfördereinheit einer Artikelzusammenstelleinheit oder einer Filteransetzeinheit, jeweils mit einem Förderelement bzw. einer Fördertrommel, ausgebildet und eingerichtet zum queraxialen Fördern stabförmiger Artikel, einer rotierend angetriebenen Antriebswelle sowie einem der Antriebswelle zugeordneten Trommelkörper, wobei der Trommelkörper auf seiner äußeren Mantelfläche Aufnahmen mit Saugöffnungen zum Aufnehmen und Halten der stabförmigen Artikel aufweist und der zum Halten der stabförmigen Artikel erforderliche Unterdruck mittels einer Unterdruckversorgung erzeugbar ist.

Zur Verdeutlichung der Vorteile der vorliegenden Erfindung werden zunächst im Folgenden die Grundfunktionen des erfindungsgemäßen Verfahrens bzw. der erfindungsgemäßen Maschinenkombination beschrieben. Im Weiteren wird dann auf bestimmte Elemente und Ihre jeweilige Funktion eingegangen.

Maschinen bzw. Maschinenkombinationen zur Verarbeitung von stabförmigen Artikeln der Tabak verarbeitenden Industrie können prinzipiell in mehrere Bereiche unterteilt werden. Einer dieser Bereiche betrifft die Strangherstellung, beispielsweise mit der Zigarettenherstellmaschine vom Typ PROTOS aus dem Hause der Anmelderin. Einen weiteren Bereich betrifft die Filteransetzung. Hierbei ist beispielsweise die Filteransetzmaschine vom Typ MAX auch aus dem Hause der Anmelderin besonders geeignet. Jedoch ist die vorliegende Erfindung nicht allein auf ein Verfahren zur Steuerung einer Zigarettenmaschine bzw. auf eine Zigarettenmaschine beschränkt, sondern betrifft auch jede Maschine, die stabförmige Artikel der Tabak verarbeitenden Industrie produziert bzw. verarbeitet, insbesondere auch für Filter- und/oder Multifilterherstellungsmaschinen. Stabförmige Artikel der Tabak verarbeitenden Industrie können somit neben den genannten Filterzigaretten auch eine Vielzahl von weiteren Artikeln, beispielsweise Filterstäbe, Multifilterstäbe, Plainzigaretten, Zigarillos mit oder ohne Filter und/oder dergleichen sein, sodass auch das erfindungsgemäße Verfahren zur Steuerung entsprechender Maschinen geeignet ist. Wenn im Folgenden somit auf "Tabakstäbe" oder "Tabakstöcke" Bezug genommen wird, sollen damit synonym auch "Filterstäbe" bzw. "Filterstöcke" angesprochen und/oder mit umfasst sein.

Unter "Tabakstäben" werden im Sinne der vorliegenden Erfindung hauptsächlich Tabakstöcke und sonstige stabförmige Körper aus Tabak verstanden, welche zur Herstellung von stabförmigen Rauchartikeln der Tabak verarbeitenden Industrie, wie insbesondere Zigaretten, verwendet werden. Bevorzugt werden solche Tabakstäbe von einem zuvor erzeugten Tabakstrang abgetrennt und sind auch bereits mit Zigarettenpapier umhüllt. Entsprechendes gilt natürlich auch für die Filterstäbe.

Zur Herstellung des Tabak- oder Filterstranges dient eine Strangmaschine, die auch als Strangeinheit bezeichnet wird. Diese umfasst vorzugsweise eine Zuführeinheit zum Zuführen eines Artikelfüllmaterials, insbesondere Tabak oder Filtermaterial bzw. Filtertowmaterial, eine weitere Zuführeinheit zum Zuführen eines Artikelhüllmaterials, beispielsweise Tabakstockumhüllungspapier oder Filterstabumhüllungspapier, eine Beleimungseinrichtung zum Auftragen von Leim auf das Artikelhüllmaterial sowie ein Format zum Umlegen des Artikelhüllmaterials um das Artikelfüllmaterial. Bei dem Leim kann es sich um Kalt- oder um Heißleim handeln. Beide Leimarten haben für die unterschiedlichen Anwendungszwecke bestimmte Vorteile. Die Strangmaschine bzw. Strangeinheit weist zum Trocknen und/oder Ausbinden des aufgetragenen Leims bevorzugt auch eine Heiz- und/oder Kühleinrichung auf. Als Förderer des so entstehenden Stranges weist die Strangmaschine ein Formatband zum Fördern des beleimten Artikelhüllmaterials zusammen mit dem Artikelfüllmaterial auf. In diesem Herstellungsstadium können derartige Tabak- und/oder Filterstränge noch als ein Halbfertigprodukt betrachtet werden.

Während des Verarbeitungsprozesses in einer Maschine der Tabak verarbeitenden Industrie durchläuft ein Artikel verschiedene Phasen, die jeweils mit Sensoren und/oder Aktuatoren überwacht bzw. gesteuert werden können. Insbesondere die Sensoren geben Informationen über den Artikel, sei es nun als Halbfertigprodukt oder als Endprodukt, ab. Diese Informationen können im weiteren Verlauf zur Steuerung der Maschine verwendet werden. Zum Erfassen von physikalischen Eigenschaften eines Artikels sind aus der Offenlegungsschrift EP 1 782 703 A1 und der Patentschrift DE 197 05 260 B4 entsprechende Sensoren bekannt.

Sofern die Tabakstöcke oder Filterstäbe von dem fortlaufenden Tabak- bzw. Filterstrang noch nicht abgetrennt sind, ist es von Vorteil, den Tabak- und/oder Filterstrang bereits virtuell in unterschiedliche Abschnitte zu unterteilen, die den später abgetrennten Tabakstöcken und/oder Filterstäben entsprechen. Dazu kann der Tabak- und/oder Filterstrang zugartig in Artikelgruppen unterteilt werden, welche jeweils von fortlaufenden (virtuellen) Artikeln, einem (virtuellen) Prüfartikel und nachlaufenden (virtuellen) Artikeln gebildet werden. Sofern der Strang noch nicht unterteilt ist, können diese Artikelzüge bzw. -gruppen virtuell vorliegen. Sofern der Strang in einzelne Tabakstöcke und/oder Filterstäbe unterteilt ist, können diese auch physisch vorliegen. Grundsätzlich kann somit festgehalten werden, dass einzelnen Artikeln Kriterien und/oder Sensorinformationen zugeordnet werden können und jeweils durch die gesamte Maschine verfolgt werden können. Anhand der zugeordneten Kriterien und/oder Sensorinformationen kann ggf. zu einem späteren Zeitpunkt auf den Artikel eingewirkt werden. Eine derartige Artikelverfolgung kann sowohl synchron als auch asynchron zum Maschinentakt durchgeführt werden.

Für die Herstellung der Tabakstöcke wird beispielsweise die eingangs erwähnte Strangmaschine aus dem Hause der Anmelderin verwendet, in der die Tabakstöcke fortlaufend von einem sogenannten Zigarettenstrang abgetrennt werden, der aus einem mit Zigarettenpapier (hier also das Artikelhüllmaterial) umhüllten Tabakstrang besteht und ebenfalls fortlaufend gebildet wird. Die Tabakstöcke, die in diesem Prozessstadium aus einem bereits mit Zigarettenpapier umhüllten Tabakstrangabschnitt bestehen, werden nach dem Abtrennen entlang einer Förderbahn von der Trennstelle in längsaxialer Richtung wegbewegt und gelangen zu der sogenannten Übergabevorrichtung, die die Bewegung der Tabakstöcke in Richtung ihrer Längserstreckung bzw. Längsachse in eine Bewegung quer dazu, also quer zur Längserstreckung bzw. -achse und somit in eine queraxiale Bewegung überführt.

Derartige Übergabevorrichtungen sind insbesondere aus der Tabak verarbeitenden Industrie bekannt. So lässt sich beispielsweise dem Patentdokument DE 41 29 672 A1 entnehmen, dass Zigaretten, die auf zwei getrennten Bahnen längsaxial gefördert werden, paarweise durch Aufnahmen der Übergabevorrichtung von oben aufgenommen werden, um sie auf einer Ellipsenbahn abzufördern und im Bereich einer kleinen Ellipsenbahn bei einer geringen Geschwindigkeit an Aufnahmen einer Muldentrommel abzugeben. Die ursprünglich nebeneinander herangeführten Zigarettenstöcke werden dabei gleichzeitig an die Aufnahme der Muldentrommel abgegeben und von dieser hintereinander abgefördert. Um die zuvor genannte Übergabe der stabförmigen Artikel zu ermöglichen, weist die Übergabevorrichtung eine Unterdruckversorgung und mindestens ein Förderelement zum Aufnehmen von längsaxial geförderten Artikeln und zum Abgeben der umlaufenden Artikel an einen queraxial abfördernden Querförderer auf. Die Übergabe kann auch in umgekehrter Reihenfolge erfolgen, sofern dies für die jeweilige Maschine erforderlich ist. Zunächst soll jedoch von der vorangegangenen Ausgestaltung ausgegangen werden. Jedes Förderelement weist zudem Aufnahmen mit Saugöffnungen zum Aufnehmen der stabförmigen Artikel auf, wobei die Unterdruckversorgung zum Erzeugen des zum Halten der stabförmigen Artikel erforderlichen Unterdrucks eingerichtet und/oder ausgebildet ist. Wird eine der Aufnahmen mit den jeweiligen Saugöffnungen in unmittelbare Nähe zu dem aufzunehmenden Artikel gebracht, so entsteht eine pneumatische Wirkverbindung mit dem jeweiligen Artikel. Die durch die Saugöffnungen einströmende Luft erfasst den Artikel und saugt diesen an die zugehörige Aufnahme. An der Grenzfläche zwischen dem Artikel und der Aufnahme besteht deshalb ein Kräftegleichgewicht. Die bevorzugt muldenförmige Ausgestaltung der Aufnahme sowie das Kräftegleichgewicht verhindern ein Abrutschen und/oder Wegfallen des Artikels. Durch dieses pneumatische Einwirken auf den Artikel kann dieser sicher mittels der Aufnahme bzw. des Förderelements der Übergabevorrichtung gefördert werden. Bevorzugt weist der Artikel ein poröses Umhüllungshüllmaterial auf, sodass auch beim Halten und/oder Fördern ein Luftstrom durch das Füllmaterial und/oder das Hüllmaterial sowie durch die Saugöffnungen erfolgt.

Der Strangmaschine im Prozess nachgeordnet ist die Querfördereinheit einer Artikelzusammenstelleinheit oder einer Filteransetzmaschine, insbesondere vom Typ MAX aus dem Hause der Anmelderin. Die Filteransetzmaschine übernimmt die Tabakstöcke von der Strangmaschine, um sie mit Filterstopfen zu versehen, welche aus Filterstäben durch Schnitt hergestellt werden. Dabei werden die Filterstopfen, die ebenfalls eine längliche Form haben, stirnseitig an einen Tabakstock angesetzt und mit diesem verbunden. Wenn die von der Strangmaschine übernommenen Tabakstöcke noch eine mehrfache Gebrauchslänge aufweisen, werden die Tabakstöcke in der Filteransetzeinheit auf einfache Gebrauchslänge geschnitten. Analog zu dem Förderelement der Übergabevorrichtung weist die Querfördereinheit eine Mehrzahl von Trommelkörpern auf, die auf der jeweiligen äußeren Mantelfläche Aufnahmen mit Saugöffnungen zum Aufnehmen und Halten der stabförmigen Artikel aufweisen. Ebenfalls ist der zum Halten der stabförmigen Artikel erforderliche Unterdruck mittels einer zugehörigen Unterdruckversorgung erzeugbar. Die Aufnahmen mit den Saugöffnungen des Trommelkörpers werden somit ebenfalls in eine pneumatische Wirkverbindung mit dem mindestens einen Artikel gebracht und wirken somit mindestens auf diesen einen Artikel pneumatisch ein. An der Grenzfläche besteht ebenfalls ein Kräftegleichgewicht. Eine derartige Fördereinheit weist nicht nur eine Fördertrommel auf, sondern mehrere, die die Artikel jeweils nacheinander weitergeben. Um die Übergabe eines Artikels von der Übergabevorrichtung an eine Fördertrommel bzw. von einer Fördertrommel zu einer nachgeordneten Fördertrommel möglichst verlustfrei zu ermöglichen, ist eine Steuerungseinheit der Maschine vorgesehen, mittels der die Einheiten der Maschine, insbesondere die Übergabevorrichtung und/oder die Fördertrommeln der Querfördereinheit steuerbar sind.
Eine weitere, aus dem Stand der Technik bekannte Strangmaschine dient zur Herstellung von Multisegmentfiltern. Eine derartige Strangmaschine wird deshalb auch als Multisegmentfilterherstellungseinrichtung bezeichnet und ist in dem Patentdokument EP 1 427 299 B1 wiedergegeben. Einer derartigen Strangmaschine ist eine im Querverfahren arbeitenden Gruppenbildevorrichtung zugeordnet, die zwei Vorratsbehälter aufweist, in denen sich Filterstäbe einer ersten bzw. zweiten Sorte befinden. An den unteren, auslassseitigen Enden der Vorratsbehälter befinden sich Entnahmetrommeln, denen jeweils eine Schneidevorrichtung zugeordnet ist, welche die aus den Vorratsbehältern entnommenen Filterstäbe durchtrennen. Es folgen jeweils eine Staffeltrommel, auf denen die aus den durchtrennten Filterstäben gebildeten Filterabschnitte in eine gestaffelte Formation gebracht und anschließend durch je eine Schiebetrommel derart verschoben werden, dass sie queraxial aufeinanderfolgend eine Reihe bilden. Die so gebildeten Reihen der Filterabschnitte werden anschließend durch je eine Beschleunigertrommel auseinandergezogen, sodass sich größere Abstände zwischen den einzelnen Filterabschnitten ergeben. Eine weitere Maschine ist aus EP0237288 A2 bekannt.

Danach werden die Filterabschnitte auf Schneidtrommeln, denen ebenfalls jeweils eine Schneidvorrichtung zugeordnet ist, nochmals durchtrennt. Die nochmals durchtrennten Filterabschnitte werden auf den Schneidtrommeln zugleich erneut auseinandergezogen, sodass zwischen den einzelnen Elementen Lücken entstehen. Diesen Lücken werden nachfolgend auf einer Zusammenstelltrommel jeweils Elemente von Filterstäben der jeweils anderen Sorte eingefügt und auf diese Weise Filterstabgruppen gebildet, die sich aus mehreren Elementen der unterschiedlichen Filtersorten zusammensetzen. Die Filterstabgruppen werden anschließend durch ein Abgabemittel in Form einer Übergabevorrichtung oder einer Wendetrommel längsaxial zur Förderrichtung ausgerichtet und in lückenloser Formation kontinuierlich auf einen von einer Bobine abgezogenen Streifen des Artikelhüllmaterials der Strangmaschine übergeben.

Die zuvor genannte Staffeltrommel, Schiebetrommel, Beschleunigertrommel, Schneidetrommel und/oder Zusammenstelltrommel sind jeweils bevorzugt nach Art der eingangs genannten Fördertrommel ausgebildet und/oder eingerichtet und bevorzugt jeweils einer entsprechenden Querfördereinheit zugeordnet. Die jeweilige Querfördereinheit umfasst deshalb die jeweilige Trommel, ausgebildet und eingerichtet zum queraxialen Fördern stabförmiger Artikel, eine rotierend angetriebene Antriebswelle sowie einen der Antriebswelle zugeordneten Trommelkörper, wobei der Trommelkörper auf seiner äußeren Mantelfläche Aufnahmen mit Saugöffnungen zu Aufnehmen und Halten der stabförmigen Artikel aufweist, und der zum Halten der stabförmigen Artikel erforderliche Unterdruck mittels einer Unterdruckversorgung erzeugbar ist. Grundsätzlich kann zwar jeder Querfördereinheit eine separate Unterdruckversorgung zugeordnet sein. Es ist jedoch bevorzugt, dass eine Unterdruckversorgung mehreren Querfördereinheiten zugeordnet ist. Sofern unterschiedliche Unterdrücke erforderlich sind, können entsprechende Druckanpassungen, insbesondere durch Druckminderungsmittel für die jeweilige Querfördereinheit vorgesehen sein.

Die Übergabevorrichtung entspricht in ihrem Prinzip der eingangs erläuterten Übergabevorrichtung. Bevorzugt weist die Übergabevorrichtung ebenfalls eine Unterdruckversorgung und mindestens ein Förderelement zum Aufnehmen von queraxial geförderten Artikeln und zum Abgeben von den umlaufenden Artikeln an einen längsaxial abfördernden Längsförderer auf, wobei jedes Förderelement Aufnahmen mit Saugöffnungen zum Aufnehmen der stabförmigen Artikel aufweist und die Unterdruckversorgung zum Erzeugen des zum Halten der stabförmigen Artikel erforderlichen Unterdrucks eingerichtet und/oder ausgebildet ist.

Vor dem Ablegen der Filterstabgruppen auf den Umhüllungsstreifen wird dieser beleimt. Zu diesem Zweck ist eine erste Beleimungseinrichtung mit bevorzugt zwei Auftragsdüsen vorgesehen, die eine Innenbeleimung in Form von zwei nebeneinander liegenden, parallel verlaufenden Leimstreifen auf den Umhüllungsstreifen aufbringt. Eine zweite Beleimungseinrichtung mit einer Leimauftragsdüse versieht den Umhüllstreifen im Bereich eines Randes mit einem Leimstreifen für die Nahtbeleimung. Es ist vorgesehen, dass für die Innenbeleimung bei Bedarf auch nur ein Leimstreifen oder auch mehr als zwei Leimstreifen vorgesehen sein können. Für unterschiedliche Anwendungszwecke können auch unterschiedliche Leime, beispielsweise Kaltleim oder Heißleim, vorgesehen sein. So ist es bevorzugt, dass die erste Beleimungsvorrichtung einen Leimvorratsbehälter für Kaltleim aufweist und dass die zweite Beleimungsvorrichtung einen Vorratsbehälter für Heißleim (oder Heißschmelzkleber) aufweist. Des Weiteren kann im Ablegebereich der Wendetrommel unterhalb des Umhüllungsstreifens ein Mittel zum Abbinden der Innenbeleimung in Form einer Heizeinrichtung vorgesehen sein, welche dafür eingerichtet und/oder ausgebildet ist, dass die durch die Leimauftragsdüsen der ersten Beleimungsvorrichtung aufgebrachte Innenbeleimung unmittelbar nach dem Auflegen der Filterstabgruppen abbindet und die Filterstabgruppen auf diese Weise unmittelbar nach dem Ablegen auf dem Umhüllungsstreifen fixiert werden, sodass sie sich nicht mehr durch äußere Einwirkungen, wie beispielsweise durch nachfolgende Filterstabgruppen, verschieben lassen.

Außerdem aktiviert die Heizeinrichtung den Heißleim bzw. den Heißschmelzkleber für die Nahtbeleimung. Die auf diese Weise zu einer lückenlosen Reihe fixierten Filterstabgruppen durchlaufen anschließend ein sogenanntes Format, also ein Formteil in Gestalt einer Formatkammer, in der der Streifen des Artikelhüllmaterials um die Filterstabgruppen herumgelegt wird, sodass ein kontinuierlicher Filterstrang gebildet wird, wobei der durch die Leimauftragsdüse der zweiten Beleimungsvorrichtung aufgetragene Heißleim bzw. Heißschmelzkleber für die Nahtbeleimung innerhalb einer Klebkammer abgebunden wird, die zu diesem Zweck als Kühleinrichtung ausgebildet ist. Der auf diese Weise verschlossene und versiegelte Filterstrang erreicht anschließend eine Schneidvorrichtung, in der Kombinationsfilterstäbe von vorzugsweise mehrfacher Gebrauchslänge geschnitten werden, die jeweils Filterelemente der unterschiedlichen Sorten von Filterstäben enthalten.

Filterstäbe oder Filterstränge, insbesondere der zuletzt erläuterten Multisegmentfilterherstellungseinrichtung, werden der Filteransetzeinheit bzw. einer zugehörigen Querfördereinheit zugeführt. Insbesondere in der Filteransetzeinheit erfolgt sodann die Zusammenführung zwischen einem Filterstab und einem Tabakstock.

Im Sinne des erfindungsgemäßen Verfahrens können somit Untereinheiten der Maschine jeweils eine Wirkeinheit darstellen. Dies können beispielsweise die Heiz- und/oder Kühleinrichtung der Strangmaschine bzw. Strangeinheit und/oder die Aufnahmen, insbesondere einer Fördertrommel oder einer Übergabevorrichtung, mit den Saugöffnungen und der damit verbundenen Unterdruckversorgung sein.

In der Praxis hat sich herausgestellt, dass die Leistungsaufnahme einer derartigen Maschine bzw. Maschinenkombination im Wesentlichen durch die Unterdruckversorgung und durch die Heiz- und/oder Kühleinrichtung verursacht ist. Der Erfindung liegt deshalb die Aufgabe zugrunde, den Leistungsbedarf der Maschine bzw. der Maschinenkombination der Tabak verarbeitenden Industrie zu senken.

Gelöst wird die Aufgabe durch das eingangs genannte Verfahren zum Steuern einer Maschinenkombination und/oder Maschine mit den Verfahrensschritten gemäss Anspruch 1.

Die thermische Wirkverbindung entsteht durch thermisches Einwirken auf mindestens einen der geförderten Artikel mittels der Wirkeinheit der Maschine. Die pneumatische Wirkverbindung entsteht durch pneumatisches Einwirken auf mindestens einen der geförderten Artikel mittels der Wirkeinheit der Maschine. Weist die Maschine eine Mehrzahl von Wirkeinheiten auf, was bevorzugt auch der Fall ist, so können mehrere Wirkverbindungen, beispielsweise mehrere thermische und/oder mehrere pneumatische Wirkverbindungen entstehen. Unter thermischem Einwirken wird bevorzugt die Übertragung von thermischer Energie verstanden. Hierbei sind im Wesentlichen zwei Übertragungsrichtungen zu berücksichtigen, nämlich die Übertragung von Wärmeenergie von der Wirkeinheit an den mindestens einen Artikel oder umgekehrt, nämlich von dem mindestens einen Artikel an die Wirkeinheit. Durch den Austausch der thermischen Energie stehen die Wirkeinheit und der jeweilige Artikel miteinander in Verbindung. Diese Verbindung wird deshalb auch als thermische Wirkverbindung verstanden. Unter dem pneumatischen Einwirken wird die Ausübung mechanischer Kräfte auf den jeweiligen Artikel mittels Luft als Arbeitsmedium verstanden. Bevorzugt ist dies ein Ansaugen und/oder Halten des jeweiligen Artikels mittels Unterdruck. Darunter kann aber auch das Abstoßen des jeweiligen Artikels mittels Überdruck verstanden werden. Durch das pneumatische Einwirken auf den mindestens einen Artikel mittels der Wirkeinheit entsteht die pneumatische Wirkverbindung zwischen dem jeweiligen Artikel und der Wirkeinheit. Wird ein Artikel beispielsweise von der Wirkeinheit angesaugt und gehalten, entsteht an der Grenzfläche zwischen dem jeweiligen Artikel und der Wirkeinheit ein Kräftegleichgewicht. Eine kraftschlüssige Verbindung wäre die Folge. Weist die Wirkeinheit darüber hinaus eine an den jeweiligen Artikel angepasste, muldenförmige Aufnahme auf, käme es in diesem Bereich zudem zu einer formschlüssigen Verbindung. Die Wirkverbindung würde in diesem Fall aus der Überlagerung der kraft- und formschlüssigen Verbindung entstehen. Sowohl für das pneumatische als auch für das thermische Einwirken ist eine Leistung der Wirkeinheit erforderlich. Soll beispielsweise ein Artikel durch die Wirkeinheit erwärmt werden, ist es hierfür erforderlich, dass der Wirkeinheit eine korrespondierende Leistung, insbesondere elektrische Leistung, zur Verfügung gestellt wird. Ähnlich verhält es sich für die pneumatische Wirkverbindung. Soll beispielsweise ein Artikel mittels Unterdruck von der Wirkeinheit gehalten werden, ist eine entsprechende Leistung einer Unterdruckversorgung erforderlich, um das pneumatische Einwirken auf den Artikel zu ermöglichen. Hierbei ist zu berücksichtigen, dass Artikel der Tabak verarbeitenden Industrie eine bestimmte Porosität aufweisen, sodass diese eine entsprechende Durchlässigkeit aufweisen. Wenn im Folgenden Bezug auf die Leistung der Wirkeinheit genommen wird, ist damit die Leistung gemeint, die erforderlich oder ursächlich dafür ist, dass die Wirkeinheit in thermische bzw. pneumatische Wirkverbindung mit dem jeweiligen Artikel gebracht wird. Unter der für die Wirkverbindung erforderlichen, energieoptimalen Sollleistung ist der Wert zu verstehen, den die entsprechende Leistung annehmen und/oder behalten soll. Durch den Artikeltypdatensatz und/oder den aktualisierten Maschinenparametersatz ist die Sollleistung in der Weise optimal, nämlich energieoptimal, eingestellt, dass der energetische Verbrauch der Maschinenkombination beziehungsweise Maschine auf ein minimal erforderliches Maß sinkt, um die Funktionssicherheit zu gewährleisten, und somit erforderlich ist, wobei hier vorzugswiese die Funktionssicherheit bezüglich einer störungsfreien, sicheren Förderung der Artikel vorrangig zu verstehen ist. Mit anderen Worten kann unter der erforderlichen, energieoptimalen Sollleistung der Wert der Leistung verstanden werden, der für eine sichere Funktion der Maschine unter Berücksichtigung der Energiebilanz erforderlich ist. Die energieoptimale Sollleistung wird im Folgenden vorzugsweise auch kurz als Sollleistung bezeichnet. Unter der die Wirkverbindung verursachenden Istleistung ist der Wert zu verstehen, den die entsprechende Leistung tatsächlich aufweist.

Die Maschine zur Verarbeitung von stabförmigen Artikeln der Tabak verarbeitenden Industrie ist vorzugsweise in der Weise ausgestaltet und/oder eingerichtet, um unterschiedliche Artikel zu verarbeiten. Die unterschiedlichen Artikel werden deshalb auch als Artikeltypen bezeichnet. So ist beispielsweise ein Filterstab grundsätzlich ein anderer Artikeltyp als ein Tabakstock. Die Artikeltypen unterscheiden sich bspw. je nach Marke auch in weiteren Eigenschaften, wie der Geometrie, also insbesondere in der Länge oder dem Durchmesser, dem Gewicht, insbesondere des Tabakstocks und/oder des Filterstabs, des eingesetzten Materials, des Umhüllungsstreifens, des Leims, oder in der Dichte, der Feuchte, oder weiteren physikalischen Eigenschaften. Um eine ordnungsgemäße Verarbeitung der Maschine zu gewährleisten, ist diese und insbesondere die Wirkeinheit an den jeweiligen Artikeltyp anzupassen. Vorzugsweise erfolgt die Einstellung der Maschine mittels eines Maschinenparametersatzes. Mittels des Maschinenparametersatzes werden die Einstellungen der Maschine, und insbesondere der Wirkeinheit gesetzt. Soll die Maschine zur Verarbeitung von einem bestimmten Artikeltyp bzw. einer bestimmten Marke verwendet werden, weist die gegenständige Erfindung den Vorteil auf, dass die für die Wirkverbindung erforderliche, energieoptimale Sollleistung der Wirkeinheit mittels der Steuerungseinheit in Abhängigkeit von einem Artikeltypdatensatz, welcher auch Markenparametersatz genannt werden kann, oder von einem durch den Artikeltypdatensatz aktualisierten, ersten Maschinenparametersatz eingestellt wird. Der Artikeltypdaten- bzw. der Maschinenparametersatz umfassen dazu die Informationen zum Einstellen der für die Wirkverbindung erforderlichen und/oder energieoptimalen Sollleistung der Wirkeinheit. Das Einstellen der Wirkeinheit erfolgt mittels der Steuerungseinheit. Die Steuerungseinheit kann im Wesentlichen die entsprechenden Informationen dem zuvor geladenen Artikeltypdatensatz entnehmen. Wurde der Maschinenparametersatz durch den Artikeltypdatensatz aktualisiert, so ist es ebenfalls möglich, dass die Steuerungseinheit die entsprechenden Informationen dem Maschinenparametersatz entnimmt.

Dank dieser artikeltypindividuellen bzw. markenspezifischen Einstellung der für die Wirkverbindung energieopimalen Sollleistung der Wirkeinheit ist es möglich, dass die Maschine zur Verarbeitung der Artikel der Tabak verarbeitenden Industrie nicht mehr Leistung aufnimmt oder "verbraucht" als erforderlich bzw. notwendig. Vielmehr kann die Leistung auf das Maß reduziert werden, das tatsächlich notwendig ist, um einen ordnungsgemäßen Ablauf der Maschine zu gewährleisten. Insbesondere ist es dadurch nicht erforderlich, dass die Unterdruckversorgung für sämtliche Artikeltypen gleich und zudem mit maximalem Unterdruck bereitgestellt wird. Dieser hohe Unterdruck ist beispielsweise für sehr leichte Artikel nicht erforderlich. Somit kann die Leistung für eine pneumatische Wirkverbindung geringer ausfallen. Entsprechendes gilt für die thermische Wirkverbindung. Auf diese Weise kann der Energieverbrauch der Maschine auf besonders einfache und effektive Weise verringert werden.

Des Weiteren ist die Überwachung der Wirkeinheit mittels wenigstens einer Bewegungssensoreinheit vorgesehen. Die Bewegungssensoreinheit ist zum Erfassen von physikalischen Positions- und oder Geschwindigkeitsgrößen des Förderers der Maschine, insbesondere der Formatbandgeschwindigkeit, der Trommeldrehzahl, der Winkelposition des Formatbandantriebs und/oder der Winkelposition einer Trommel eingerichtet und/oder ausgebildet. Die Bewegungssensoreinheit kann dazu eine Datenvorverarbeitungseinheit aufweisen, die die erfassten Signale verarbeitet und in die physikalischen Größen repräsentierenden Werte und/oder Signale umwandelt. Darüber hinaus wurde eingangs die Verfolgung von Artikeln erörtert. Dank der mindestens einen Bewegungssensoreinheit können die Artikel somit während des Herstellungsprozesses verfolgt werden.

Darüber hinaus zeichnet sich die Erfindung durch ein Ermitteln der die Wirkverbindung verursachenden Istleistung der Wirkeinheit durch Messen mindestens einer leistungsrelevanten physikalischen Größe der Wirkeinheit mittels einer Prozesssensoreinheit aus. Die Prozesssensoreinheit ist zum Erfassen von einer leistungsrelevanten, physikalischen Größe der Wirkeinheit, insbesondere der Temperatur einer Heizeinrichtung oder Kühleinrichtung, der dieser zugeführten, elektrischen Leistung, des Unterdrucks und/oder Volumenstroms einer Unterdruckversorgung, der einer Unterdruckversorgung zugeführten elektrischen Leistung, eingerichtet und/oder ausgebildet. Die Prozesssensoreinheit kann dazu eine Datenvorverarbeitungseinheit aufweisen, die die erfassten Signale verarbeitet und in die physikalischen Größen repräsentierenden Werte und/oder Signale umwandelt. Leistungsrelevant sind dabei diejenigen Größen, mittels der die Istleistung der Wirkeinheit bestimmbar oder berechenbar ist.

In der Praxis hat sich gezeigt, dass die Istleistung der Wirkeinheit häufig nicht der Sollleistung der Wirkeinheit entspricht. Um diese Abweichung möglichst gering zu halten, zeichnet sich die Erfindung bevorzugt durch ein Aktualisieren des ersten Maschinenparametersatzes, insbesondere der relevanten und vorgebbaren Parameter des Maschinenparametersatzes, auf Basis der ermittelten Istleistung aus. Hierzu wird die Abweichung zwischen der Sollleistung und der Istleistung ermittelt und die Aktualisierung des Maschinenparametersatzes nach einem vorgegebenen Regelalgorithmus vorgenommen. Ist beispielsweise die Istleistung einer Unterdruckversorgung geringer als deren Sollleistung so ist der für die Leistung der Unterdruckversorgung relevante Parameter des Maschinenparametersatzes in der Weise anzupassen, dass die Istleistung der Unterdruckversorgung steigt. Die Istleistung wird somit anhand des aktualisierten Maschinenparametersatzes eingestellt.

Eine vorteilhafte Ausgestaltung des Verfahrens zeichnet sich durch einen Einrichtbetrieb der Maschine aus, der die folgenden Schritte umfasst: Erfassen von Artikeleigenschaften eines durch die Wirkeinheit geförderten und/oder geführten und/oder von der Wirkeinheit weggeführten Artikels mittels einer Lagesensoreinheit und/oder einer Artikelsensoreinheit, Ermitteln der Qualität und/oder Lageposition des geförderten, geführten bzw. weggeführten Artikels basierend auf den jeweiligen Artikeleigenschaften mittels der oder einer weiteren Steuerungseinheit, Verringern der Sollleistung durch ein entsprechendes Verändern mindestens eines der Parameter des ersten Maschinenparametersatzes bis die Qualität und/oder Lageposition eine vorgegebene Grenze erreicht, und Aktualisieren des mindestens einen Parameters oder des entsprechenden Parametersatzes des ersten Maschinenparametersatzes, der zu der ggf. um einen Sicherheitsfaktor und/oder -wert beaufschlagten, verringerten Sollleistung korrespondiert und/oder bevorzugt Speichern eines zweiten Maschinenparametersatzes, der zu der ggf. um einen Sicherheitsfaktor und/oder -wert beaufschlagten, verringerten Sollleistung korrespondiert, in einem Datenspeicher der Maschine.

Mittels der Artikelsensoreinheit können Artikeleigenschaften erfasst werden. Die Artikelsensoreinheit ist dazu zum Erfassen von physikalischen Eigenschaften des jeweiligen Artikels, insbesondere mindestens einer geometrischen Größe, wie der Länge oder des Durchmessers, des Gewichts, der Feuchte, der Dichte und/oder der Porosität des Umhüllungsmaterials, und/oder eines Fremdkörpers, eingerichtet und ausgebildet. Die Lagesensoreinheit ist hingegen zum Erfassen der Position des jeweiligen Artikels relativ zu der Wirkeinheit, insbesondere der längsaxialen Position des jeweiligen Artikels an einer Aufnahme oder in einer Aufnahmemulde einer Fördertrommel, einem Abstand zu einer Heizeinrichtung bzw. Kühleinrichtung der Wirkeinheit, und/oder das Vorhandensein des jeweiligen Artikels innerhalb eines vorgegebenen Positionsbereichs, eingerichtet und ausgebildet.

Die Artikelsensoreinheit und/oder die Lagesensoreinheit können dazu jeweils eine Datenvorverarbeitungseinheit aufweisen, die die erfassten Signale verarbeitet und in die physikalischen Größen repräsentierenden Werte und/oder Signale umwandelt. Die erfassbaren Artikeleigenschaften können somit die oben genannten physikalischen Eigenschaften des jeweiligen Artikels und/oder die zuvor genannte Position bzw. Lage des jeweiligen Artikels relativ zu der Wirkeinheit umfassen. Zum Führen kann die Wirkeinheit einen Förderer aufweisen. Somit kann die Lagesensoreinheit beispielsweise die Lage und/oder Position eines Artikels in einer Aufnahmemulde einer Fördertrommel erfassen. Die Artikelsensoreinheit ist in einer Ausgestaltung stromabwärtsseitig zu der Wirkeinheit angeordnet. Sie eignet sich in diesem Fall zur Erfassung der physikalischen Eigenschaften der jeweils von der Wirkeinheit weggeführten Artikel. Die Artikelsensoreinheit kann jedoch auch in der Weise angeordnet sein, um die physikalischen Eigenschaften des jeweiligen Artikels zu erfassen, während dieser durch die Wirkeinheit geführt wird. Der Vollständigkeit halber wird an dieser Stelle darauf hingewiesen, dass der Förderer der Maschine auch ein Teil der Wirkeinheit sein kann. Aus dem Stand der Technik sind hierzu beispielsweise Formatbänder und Fördertrommeln bekannt.

Aus den jeweils erfassten Artikeleigenschaften kann auf die Qualität des geförderten und/oder geführten bzw. weggeführten Artikels geschlossen werden. Die Qualität eines Artikels gibt an, in welchem Maß ein Artikel mindestens einer vorgebbaren Artikelanforderung entspricht. Weicht beispielsweise der Durchmesser nur um 1 Prozent von dem geforderten Artikeldurchmesser ab, so kann in Bezug auf diese Artikeleigenschaft von einer hohen Qualität gesprochen werden. Unter der Qualität eines Artikels kann deshalb auch verstanden werden, zu welchem Grad die erfassten Artikeleigenschaften die jeweils zugehörigen, vorgebbaren Eigenschaftsanforderungen erfüllen. Die Qualität kann sich dazu aus der Summe der, insbesondere gewichteten, Grade oder Maße bestimmen.

Ein in der Praxis oftmals auffindbarer Weg zur Sicherstellung der Funktion der Maschine ist die Erhöhung der Leistung der Wirkeinheiten. So ist es beispielsweise in der Praxis nicht unüblich, dass eine Unterdruckversorgung einer Wirkeinheit unabhängig von dem zu verarbeitenden Artikel auf Volllast, also mit maximaler Saugleistung, betrieben wird. Dies ist zwar zur Sicherstellung der Funktion vorteilhaft, jedoch nicht unter dem Gesichtspunkt des energetischen Verbrauches der Maschine. In der Praxis konnte deshalb festgestellt werden, dass die Leistung einer Wirkeinheit oftmals verringert werden kann, ohne Funktionseinbußen beim Fördern der Artikel hinnehmen zu müssen. Die vorteilhafte Ausgestaltung zeichnet sich somit durch eine Verringerung der Sollleistung durch ein entsprechendes Verändern mindestens eines der Parameter des ersten Maschinenparametersatzes aus, bis die Qualität eine vorgegebene Qualitätsgrenze erreicht. Durch die Parameter des ersten Maschinenparametersatzes werden die Maschine und/oder die Istleistung eingestellt. Dies gilt somit auch für die jeweilige Wirkeinheit. Die Sollleistung kann somit durch mindestens einen zugehörigen Parameter verringert werden. Durch die Qualitätsgrenze wird sichergestellt, dass die Qualität der jeweiligen Artikel das erforderliche Mindestmaß an Funktion erfüllt. Gleichzeitig kann die Leistung auf einen hierfür (insbesondere minimalen) notwendigen Wert gesenkt werden. Der energetische Verbrauch der Maschine sinkt auf ein minimal erforderliches Maß, um die Funktionssicherheit zu gewährleisten, wobei hier die Funktionssicherheit bezüglich einer störungsfreien, sicheren Förderung der Artikel vorrangig zu verstehen ist. Mit anderen Worten werden die Einstellungen der Maschine in zweierlei Richtungen optimiert, und zwar bezüglich des Energieverbrauchs als auch in Bezug auf die Gewährleistung der notwendigen Qualität der jeweiligen Artikel.

Für den Betrieb der Maschine ist neben dem Energieverbrauch der Maschine und der Qualität der Artikel insbesondere die Einhaltung der vorgegebenen Funktions- und/oder Qualitätsgrenze für eine Mehrzahl von Artikeln von großer Bedeutung. Für diese Ausgestaltung des Verfahrens ist es deshalb vorgesehen, den mindestens einen Parameter oder entsprechenden Parametersatz des ersten Maschinenparametersatzes, der zu der bevorzugt um einen Sicherheitsfaktor- und/oder Wert beaufschlagten, verringerten Sollleistung korrespondiert, zu aktualisieren. Die verringerte Sollleistung entspricht hierbei der Sollleistung, die zuvor verringert wurde, bis die Funktionssicherheit und/oder die Qualität die vorgegebene Grenze erreicht. Um diese Funktionssicherheit und/oder Qualität auch für die weiteren Artikel zu gewährleisten, korrespondiert der Parameter bzw. Parametersatz bevorzugt zu einer Sollleistung, die der um einen Sicherheitsfaktor und/oder -wert beaufschlagten, verringerten Sollleistung entspricht. So kann die verringerte Sollleistung beispielsweise um 10 Prozent erhöht werden. Die sodann vorliegenden Werte können die entsprechenden Parameter bzw. den entsprechenden Parametersatz des Maschinenparameters aktualisieren.

Nicht immer ist die Optimierung des Energieverbrauchs der Maschine erwünscht. Um dennoch einen derartigen Betrieb möglichst schnell wieder zu erreichen, ist es von Vorteil, die bereits ermittelten Einstellungen für einen derartigen Betrieb separat abzuspeichern, um diese zu einem späteren Zeitpunkt erneut zu laden und die Maschine entsprechend zu betreiben. Bevorzugt ist deshalb ein Speichern eines zweiten Maschinenparametersatzes vorgesehen, der zu der bevorzugt um einen Sicherheitsfaktor und/oder -wert beaufschlagten, verringerten Sollleistung korrespondiert, und zwar in einem Datenspeicher der Maschine. Werden im Betrieb beispielsweise andere Einstellungen, insbesondere Testeinstellungen oder Nominal- und/oder Defaulteinstellungen vorgenommen, ist es für den energieoptimierten Betrieb sehr einfach möglich, die Daten des zweiten Maschinenparametersatzes zu verwenden und mit diesen den ersten Maschinenparametersatz zu ersetzen oder zu aktualisieren.

Eine weitere vorteilhafte Ausgestaltung des Verfahrens zeichnet sich durch ein Erfassen von mindestens einer Artikeleigenschaft eines der Wirkeinheit zugeführten Artikels mittels mindestens einer weiteren Artikelsensoreinheit und/oder mittels Übertragung der mindestens einen Artikeleigenschaft von einer stromaufwärts angeordneten Einheit der Maschine und/oder eines zugehörigen Speichers und/oder durch ein Verändern mindestens eines Parameters des ersten Maschinenparametersatzes in Abhängigkeit von der mindestens einen erfassten Artikeleigenschaft des zugeführten Artikels aus. Die in diesem Zusammenhang genannte Artikelsensoreinheit ist zum Erfassen von mindestens einer Artikeleigenschaft eines der Wirkeinheit zugeführten Artikels eingerichtet und/oder ausgebildet. Bevorzugt ist die jeweilige Artikelsensoreinheit stromaufwärts zu der entsprechenden Wirkeinheit angeordnet. Bereits zuvor wurde darauf hingewiesen, dass eine Maschine zur Verarbeitung von stabförmigen Artikeln der Tabak verarbeitenden Industrie mehrere Wirkeinheiten aufweisen kann. Oftmals sind diese Wirkeinheiten stromabwärts hintereinander angeordnet. So kann ein von einer ersten Wirkeinheit weggeführter Artikel zu einer zweiten nachgeordneten Wirkeinheit gefördert werden. Für die zweite Wirkeinheit ist dieser Artikel der dieser zweiten Wirkeinheit zugeführte Artikel. Sofern sich die Artikeleigenschaften auf dem Förderweg zwischen zwei Wirkeinheiten zumindest im Wesentlichen nicht verändern, können Artikelsensoreinheiten eingespart werden. So kann beispielsweise eine durch eine Artikelsensoreinheit, die stromabwärts hinter einer ersten Wirkeinheit und stromaufwärts vor einer nachgeordneten zweiten Wirkeinheit angeordnet ist, erfasste Artikeleigenschaft für beide Wirkeinheiten verwendet werden. Aufgrund der Möglichkeit der Verfolgung eines Artikels ist es darüber hinaus auch möglich, dass bereits erfasste Eigenschaften eines Artikels gespeichert und für spätere Anwendungszwecke zur Verfügung gestellt werden. Dank der erfassten Artikeleigenschaften kann die jeweilige Wirkeinheit an den zugeführten Artikel angepasst werden. Die Anpassung der Wirkeinheit erfolgt mittels der Parameter des ersten Maschinenparametersatzes. Die erfassten Artikeleigenschaften können somit verwendet werden, um mindestens einen Parameter des Maschinenparametersatzes zu verändern, sodass gewährleistet wird, dass die Qualität und/oder die Mindestanforderungen an die Artikeleigenschaften gewährleistet sind.

Eine weitere vorteilhafte Ausgestaltung des Verfahrens zeichnet sich durch ein Erfassen von mindestens einer Artikeleigenschaft eines der durch die Wirkeinheit geförderten und/oder geführten und/oder von der Wirkeinheit weggeführten Artikels mittels der Prozesssensoreinheit und/oder einer weiteren Artikelsensoreinheit, und durch ein Verändern mindestens eines Parameters des ersten Maschinenparametersatzes in Abhängigkeit von der mindestens einen erfassten Artikeleigenschaft des geförderten, geführten bzw. weggeführten Artikels aus. Es wurde bereits erläutert, dass die Prozesssensoreinheit zum Erfassen mindestens einer Artikeleigenschaft eines des von der Wirkeinheit geführten Artikels eingerichtet und/oder ausgebildet ist. Des Weiteren ist die Artikelsensoreinheit zum Erfassen mindestens einer Artikeleigenschaft eines des von der Wirkeinheit weggeführten Artikels eingerichtet und/oder ausgebildet. Unter Wegführen ist hierbei das stromabwärts gerichtete Fördern des Artikels gemeint. Die gemessenen bzw. erfassten Artikeleigenschaften können ebenfalls genutzt werden, um eine verbrauchsoptimierte Einstellung der Maschine bzw. der jeweiligen Wirkeinheit zu erreichen. Wird beispielsweise durch die Artikelsensoreinheit erfasst, dass die Leimnaht eines weggeführten Artikels nicht vollständig abgebunden ist und somit die Gefahr besteht, dass die Naht aufbricht, so sind die entsprechenden Parameter des ersten Maschinenparametersatzes in der Weise zu ändern, dass die nachfolgend von der Wirkeinheit weggeführten Artikel eine zumindest im Wesentlichen vollständig abgebundene Naht aufweisen. Dies kann beispielsweise durch die Erhöhung einer Heizleistung der entsprechenden Wirkeinheit gewährleistet werden. Durch ein Verändern mindestens eines Parameters des ersten Maschinenparametersatzes in Abhängigkeit von der mindestens einen erfassten Artikeleigenschaft des geführten und/oder weggeführten Artikels kann somit auch die erforderliche Qualität der jeweiligen Artikel und/oder die jeweils erforderliche Artikeleigenschaft besonders einfach und effektiv gewährleistet werden.

Eine weitere vorteilhafte Ausgestaltung des Verfahrens zeichnet sich durch ein Registrieren und/oder virtuelles Kennzeichnen des zugeführten Artikels aus, dessen mindestens eine Artikeleigenschaft außerhalb eines vorgegebenen Artikeltoleranzbereichs für die Artikel ist, wobei die Artikeleigenschaft des registrierten und/oder gekennzeichneten Artikels bei der Auswertung der Qualität und/oder bei der Veränderung des mindestens einen Parameters des ersten Maschinenparametersatzes unberücksichtigt bleibt. Der Artikeltoleranzbereich gibt hierbei den für die jeweilige Artikeleigenschaft und/oder Artikeleigenschaften tolerierten Wertebereich an. Ist beispielsweise ein Durchmesser von 6 mm erwünscht, so kann der tolerierte Wertebereich ggf. zwischen 5,9 mm und 6,1 mm sein. Der mindestens eine Artikeltoleranzbereich ist zudem vorgebbar für die jeweils zuführenden Artikel. Artikel, deren mindestens eine Artikeleigenschaft außerhalb eines vorgegebenen Artikeltoleranzbereiches ist, werden registriert. Dies wäre beispielsweise dann der Fall, wenn ein zugeführter Artikel einen Durchmesser von mehr als 6,1 mm aufweist. Da dieser Artikel aufgrund des Überschreitens des Artikeltoleranzbereiches in einem späteren Verfahrensschritt ausgeschleust wird, ist es nicht notwendig, die Maschine auf einen derartigen Artikel anzupassen. Somit kann in diesem Sinne darauf verzichtet werden, die Leistung einer Wirkeinheit zu verändern, da derartige Artikel bevorzugt bereits in dieser ausgeschleust werden. Es ist deshalb vorgesehen, dass die Artikeleigenschaften des registrierten Artikels bei der Auswertung der Qualität und/oder bei der Veränderung des mindestens einen Parameters des ersten Maschinenparameters unberücksichtigt bleiben. Damit kann besonders einfach und effektiv sichergestellt werden, dass die Leistung der jeweiligen Wirkeinheit nicht unnötig erhöht wird.

Eine weitere vorteilhafte Ausgestaltung des Verfahrens zeichnet sich durch ein Anzeigen der Sollleistung und/oder der Istleistung der Wirkeinheit, einer Leistungsabweichung zwischen der Istleistung der Wirkeinheit und der Sollleistung der Wirkeinheit, einer in Abhängigkeit der Leistungsabweichung über einen vorgegebenen Zeitraum ermittelten Arbeit bzw. Energie, und/oder einer zu der Arbeit bzw. Energie korrespondierenden CO₂-Bilanz, insbesondere CO₂-Verminderung aus, und zwar jeweils mittels der Anzeigeeinheit der Maschine. Vorzugsweise erfolgt eine derartige Anzeige auf grafische Weise, mittels Farbumschlag, ähnlich einer Ampelschaltung. Damit ist der Nutzen der Anpassung des ersten Maschinenparametersatzes nicht zuletzt für das Bedienpersonal in der Praxis sofort ersichtlich und verständlich. Insbesondere die CO₂-Bilanz und/oder die Verminderung des CO₂ helfen dabei, das Verfahren in der Praxis auch effektiv anzuwenden.

Eine weitere vorteilhafte Ausgestaltung des Verfahrens zeichnet sich durch ein Anzeigen einer Fehlermeldung mittels der Anzeigeeinheit, wenn mindestens ein Parameter des Maschinenparametersatzes außerhalb eines zugehörigen Parametertoleranzbereiches ist, und/oder durch ein Aktualisieren des Parametertoleranzbereichs in Abhängigkeit des Artikeltypdatensatz und/oder des ersten oder zweiten Maschinenparametersatzes
aus. Aus der Praxis ist es bekannt, dass eine Maschine zur Verarbeitung von stabförmigen Artikeln der Tabak verarbeitenden Industrie, und insbesondere auch eine Wirkeinheit, einem Verschleiß oder einer Verschmutzung unterliegt. Die Parameter des Maschinenparametersatzes können daran entsprechend angepasst werden. Ein zugehöriger Parametertoleranzbereich gibt den für den jeweiligen Parameter des Maschinenparametersatzes tolerierten Wertebereich an. Der Wertebereich bzw. der Parametertoleranzbereich kann vorgegeben werden. Überschreitet der jeweilige Parameter den zugehörigen Parametertoleranzbereich, ist davon auszugehen, dass es sich nicht um eine reguläre und/oder übliche Anpassung handelt, sondern es kann beispielsweise ein Fehler oder eine sonstige Fehlfunktion erwartet werden. Es ist deshalb vorgesehen, eine entsprechende Fehlermeldung, insbesondere eine Warnmeldung und/oder einen Hinweis auf eine erforderliche Wartung und/oder Reinigung des jeweiligen Fördermittels und/oder der Wirkeinheit mittels einer Anzeigeeinheit der Maschine auszugeben bzw. anzuzeigen.

Für die verschiedenen Artikeltypen ist es vorgesehen, dass der erste Maschinenparametersatz, und zwar in Abhängigkeit des Artikeltypdatensatzes, angepasst ist. Es ist deshalb auch von Vorteil, den Parametertoleranzbereich in Abhängigkeit des Artikeltypdatensatzes zu aktualisieren bzw. zu bestimmen. Somit wird gewährleistet, dass der Parametertoleranzbereich dynamisch an den jeweiligen Artikeltyp angepasst ist und die entsprechenden Fehlermeldungen korrekt ausgegeben werden können.

Eine weitere vorteilhafte Ausgestaltung des Verfahrens zeichnet sich dadurch aus, dass die Wirkeinheit eine Heiz- und/oder Kühleinrichtung umfasst, insbesondere einen Heiz- und/oder Kühlsteg, welche jeweils in thermische Wirkverbindung mit mindestens einem der Artikel gebracht wird, und dass die Prozesssensoreinheit die Temperatur der Heiz- und/oder Kühleinrichtung ermittelt. Die Heiz- und/oder Kühleinrichtung ist somit eine besondere Ausgestaltung einer Wirkeinheit. Bevorzugt weist die Heizeinrichtung einen Heizsteg bzw. die Kühleinrichtung einen Kühlsteg auf. Damit kann thermische Energie von der Heizeinrichtung an den jeweiligen Artikel oder von dem Artikel an die Kühleinrichtung übertragen werden, sodass eine thermische Wirkverbindung zwischen dem Artikel und der jeweiligen Einrichtung entsteht. Insbesondere um diese Wirkverbindung zu überwachen, ist es vorgesehen, dass die Prozesssensoreinheit die Temperatur der Heiz- und/oder Kühleinrichtung ermittelt. Dank dieser Ausgestaltung ist die die thermische Wirkverbindung verursachende Istleistung der Wirkeinheit besonders einfach messbar bzw. ermittelbar.

Eine weitere vorteilhafte Ausgestaltung des Verfahrens zeichnet sich durch ein Erfassen einer Leimmenge eines der zugeführten Artikel als zumindest eine der Artikeleigenschaften des zugeführten Artikels aus. Die Leimmenge ist also eine bevorzugte Artikeleigenschaft des jeweils zugeführten Artikels. Die Leimmenge ist sowohl für eine Heiz- und/oder Kühleinrichtung als auch für eine Fördereinrichtung bedeutsam. Zum Abbinden des Leimes bedarf es eines bestimmten Energieaustausches mit der Heiz- oder Kühleinrichtung. Je größer die Menge des Leimes ist, desto größer ist auch die auszutauschende Energiemenge. Hat beispielsweise ein zugeführter Artikel eine große Leimmenge, so ist die Leistung der Wirkeinheit entsprechend anzupassen. Dies gilt insbesondere für die Heiz- und/oder Kühlleistung und/oder für den Unterdruck bzw. die Luftleistung einer Unterdruckversorgung, denn die Leimmenge beeinflusst auch das Gewicht des Artikels.

Eine weitere Ausgestaltung des Verfahrens zeichnet sich durch ein Erfassen einer Bruchstelle, einer Geometriegröße und/oder einer Massengröße eines der weggeführten Artikel, insbesondere dessen Durchmesser, Länge, Gewicht, Dichte und/oder Feuchte, als eine Artikeleigenschaft des weggeführten Artikels aus. So ist beispielsweise der Durchmesser als eine Artikeleigenschaft des jeweils weggeführten Artikels von besonderer Bedeutung. Ist der Durchmesser beispielsweise größer als vorgegeben, kann dafür die Leistung der Heiz- und/oder Kühleinrichtung verantwortlich sein. Ist deren Leistung zu gering, kann dies zu einem nicht vollständigen Abbinden des Leims führen, sodass die Naht des Artikelhüllmaterials etwas nachgibt und der Durchmesser des Artikels wächst. Es ist somit bevorzugt, die erfassten Artikeleigenschaften mit entsprechenden Referenzeigenschaften für die jeweiligen Artikel zu vergleichen und anhand dieses Vergleichs eine Anpassung und/oder Aktualisierung des, insbesondere ersten, Maschinenparametersatzes vorzunehmen.

Eine bevorzugte Ausgestaltung des Verfahrens zeichnet sich dadurch aus, dass die Leistung, also die Sollleistung oder die Istleistung der Heiz- und/oder Kühleinrichtung verändert wird, wenn der erfasste Durchmesser größer als ein maximal zulässiger Durchmesser oder kleiner als ein minimaler zulässiger Durchmesser ist. Damit ist es möglich, eine Einheitlichkeit von verarbeiteten bzw. hergestellten Artikeln zu erreichen. Der maximale bzw. minimale zulässige Durchmesser kann dazu vorgegeben werden, wobei der maximale und/oder minimale zulässige Durchmesser von dem Artikeltypdatensatz abhängig ist.

Eine weitere vorteilhafte Ausgestaltung des Verfahrens zeichnet sich dadurch aus, dass die Wirkeinheit mindestens ein Förderelement und eine Unterdruckversorgung umfasst, wobei jedes Förderelement eine Mehrzahl von Aufnahmen mit einer Mehrzahl von Saugöffnungen zum Aufnehmen der stabförmigen Artikel aufweist und der zum Halten der stabförmigen Artikel erforderliche Unterdruck mittels der Unterdruckversorgung erzeugt wird, wobei mindestens eine der Saugöffnungen in pneumatische Wirkverbindung mit mindestens einem der Artikel gebracht wird, und dass die Wirkeinheit die mindestens eine Prozesssensoreinheit aufweist, die den durch die Unterdruckversorgung erzeugten Unterdruck und/oder Luftvolumenstrom erfasst. Die der Wirkeinheit zugeordnete Unterdruckversorgung und das zugeordnete Förderelement mit deren Aufnahmen und Saugöffnungen wurden bereits eingangs ausführlich beschrieben. Durch das Ansaugen der Luft wird ein Artikel angesogen und kommt sodann in Kontakt mit der Aufnahme. Somit entsteht zwischen den Saugöffnungen und dem jeweiligen Artikel eine pneumatische Wirkverbindung. Mit anderen Worten wird auf den jeweiligen Artikel eine Saugkraft ausgeübt, welche durch die Unterdruckversorgung erzeugt wird. Um den erforderlichen Unterdruck bzw. Luftvolumenstrom bereitzustellen, bedarf es einer elektrischen Leistung eines Gebläses der Unterdruckversorgung. Somit ist eine Leistung der Wirkeinheit erforderlich, um die pneumatische Wirkverbindung zwischen den Saugöffnungen und dem jeweiligen Artikel zu ermöglichen. Wenn die Details der Wirkeinheit bzw. der Unterdruckversorgung bekannt sind, ist es möglich, anhand des erfassten Unterdrucks und/oder des Luftvolumenstroms auf die Leistung der Unterdruckversorgung bzw. die Istleistung der Wirkeinheit zu schließen. Dazu ist es vorgesehen, dass die mindestens eine Prozesssensoreinheit der Wirkeinheit dazu eingerichtet und/oder ausgebildet ist, um den durch die Unterdruckversorgung erzeugten Unterdruck und/oder Luftvolumenstrom zu erfassen.

Eine weitere vorteilhafte Ausgestaltung des Verfahrens zeichnet sich durch ein Erfassen einer Geometrie- und/oder Massengröße des zugeführten Artikels, insbesondere dessen Durchmesser, Länge und/oder Gewicht, als eine Artikeleigenschaft des zugeführten Artikels mittels der zugehörigen Artikelsensoreinheit aus, wobei diese zum Erfassen der Artikeleigenschaften eines zugeführten Artikels eingerichtet und/oder ausgebildet ist. Mittels der erfassten Artikeleigenschaften kann der Maschinenparametersatz für einen energieoptimierten Betrieb angepasst werden.

Eine weitere vorteilhafte Ausgestaltung des Verfahrens zeichnet sich durch ein Erfassen einer Sitzposition in längsaxialer Richtung des geförderten Artikels an bzw. in der jeweiligen Aufnahme bzw. der jeweiligen Mulde des Förderelements als eine Artikeleigenschaft des geführten Artikels mittels der zugehörigen Lagesensoreinheit und/oder ein Erfassen der jeweiligen Winkelposition des von der Aufnahme des sich kontinuierlich drehenden Förderelements gehaltenen Artikels mittels der Bewegungssensoreinheit aus. Mit der Sitzposition ist bevorzugt die Position und/oder die Lage des Artikels an oder in der jeweiligen Aufnahme gemeint. Bevorzugt ist eine derartige Aufnahme muldenförmig ausgestaltet. Ragt der Artikel beispielsweise über die Sollposition in einer derartigen muldenförmigen Aufnahme teilweise hinaus, kann dies beispielsweise an einer zu geringen Bremskraft aufgrund einer zu geringen Saugleistung der Unterdruckversorgung liegen. Die längsaxiale Sitzposition ist somit eine geeignete Eigenschaft des durch die Wirkeinheit geführten Artikels, um den Maschinenparametersatz anzupassen bzw. zu aktualisieren. Bevorzugt wird hierzu die Winkelposition der jeweiligen Aufnahme des Förderelements mittels der Bewegungssensoreinheit erfasst. Dies ist vorteilhaft für die Verfolgung eines Artikels, wie es bereits eingangs erläutert wurde. Des Weiteren wurde bereits die vorteilhafte Registrierung eines Artikels mit mindestens einer Eigenschaft erläutert, die außerhalb eines vorgebbaren Artikeltoleranzbereiches und deshalb für ein Ausschleusen vorgesehen ist. Weist beispielsweise ein Artikel eine über den Toleranzbereich hinausgehende Masse auf, so ist es zu erwarten, dass dieser Artikel nicht korrekt in der Mulde der jeweiligen Aufnahme gehalten werden kann. Wird bei diesem Artikel eine fehlerhafte Sitzposition erfasst, ist dies ebenfalls zu erwarten. Aufgrund der Registrierung wäre eine Veränderung bzw. Anpassung mindestens eines Parameters des Maschinenparametersatzes bevorzugt nicht notwendig. Insbesondere wäre die Leistung der Wirkeinheit in diesem Fall nicht zu erhöhen, da dieser ohnehin für ein Ausschleusen vorgesehen wird.

Eine weitere vorteilhafte Ausgestaltung des Verfahrens zeichnet sich durch ein Erhöhen der die Wirkverbindung verursachenden Sollleistung, insbesondere des zugehörigen Unterdrucks und/oder des zugehörigen Luftvolumenstroms aus, wenn die Sitzposition des geförderten Artikels außerhalb eines vorgegebenen Sitzpositionstoleranzbereiches, insbesondere wenn die längsaxiale Sitzposition außerhalb eines vorgegebenen Abschnittes der zugehörigen Aufnahme mit Saugöffnungen, ist, und/oder wenn ein Verlust eines zugeführten, nicht registrierten Artikels basierend auf der mittels der Lagesensoreinheit erfassten Sitzposition detektiert wird. Es ist also vorgesehen, dass für die Erhöhung der Sollleistung vorzugsweise diejenigen Artikel in Betracht kommen, deren Werte im Artikeltoleranzbereich liegen. Es wird davon ausgegangen, dass die jeweilige Wirkeinheit für diese Artikel korrekt einstellbar ist. Wenn nun also die Sitzposition des jeweiligen Artikels außerhalb eines vorgegebenen Sitzpositionstoleranzbereiches ist oder ein Verlust des Artikels detektiert wird, wird die Sollleistung der Wirkeinheit, insbesondere die der Unterdruckversorgung, erhöht. Dies erfolgt bevorzugt durch entsprechendes Anpassen mindestens eines Parameters des Maschinenparametersatzes.

Die der Erfindung zugrunde liegende Aufgabe wird ebenfalls gelöst durch eine Maschinenkombination zur Verarbeitung von stabförmigen Artikeln der Tabak verarbeitenden Industrie, umfassend eine Strangmaschine, die eine Zuführeinheit zum Zuführen eines Artikelfüllmaterials, eine weitere Zuführeinheit zum Zuführen eines Artikelhüllmaterials, eine Beleimungseinrichtung zum Auftragen von Leim auf das Artikelhüllmaterial, eine Strangformeinheit zum Umlegen des Artikelhüllmaterials um das Artikelfüllmaterial und einer Heiz- und/oder Kühleinrichtung zum Trocknen und/oder Abbinden des aufgetragenen Leims und als Förderer des Artikel ein Formatband zum Fördern des beleimten Artikelhüllmaterials zusammen mit dem Artikelfüllmaterial aufweist, eine umlaufende Übergabevorrichtung, die eine Unterdruckversorgung und mindestens ein Förderelement zum Aufnehmen von längsaxial geförderten Artikeln und zum Abgeben von der umlaufenden Artikel an ein queraxial abförderndes Förderelement, oder umgekehrt, aufweist, wobei jedes Förderelement Aufnahmen mit Saugöffnungen zum Aufnehmen der stabförmigen Artikel aufweist und die Unterdruckversorgung zum Erzeugen des zum Halten der stabförmigen Artikel erforderliche Unterdrucks eingerichtet und ausgebildet ist, und/oder einer Querfördereinheit einer Artikelzusammenstelleinheit oder einer Filteransetzeinheit, jeweils mit einem Förderelement, ausgebildet und eingerichtet zum queraxialen Fördern stabförmiger Artikel, einer rotierend angetriebenen Antriebswelle sowie einem der Antriebswelle zugeordneten Trommelkörper, wobei der Trommelkörper in Mulden seiner äußeren Mantelfläche Aufnahmen mit Saugöffnungen zum Aufnehmen und Halten der stabförmigen Artikel aufweist und der zum Halten der stabförmigen Artikel erforderliche Unterdruck mittels einer Unterdruckversorgung erzeugbar ist, wobei die Maschinenkombination mit der Heiz- und/oder Kühleinrichtung als Wirkeinheit und/oder mit den Aufnahmen, insbesondere einer Filteransetzeinheit und/oder einer Übergabevorrichtung, den Saugöffnungen und der damit verbundenen Unterdruckversorgung als Wirkeinheit jeweils nach einem Verfahren gemäß einem der vorangehenden Ausgestaltungen betrieben ist, und wobei die Maschine mindestens eine Steuerungseinheit, mindestens eine Bewegungssensoreinheit, mindestens eine Prozesssensoreinheit, mindestens eine Lagesensoreinheit und eine Anzeigeeinheit aufweist, die zum Ausführung des Verfahrens ausgebildet und eingerichtet sind.

Weitere vorteilhafte und/oder zweckmäßige Merkmale und Ausgestaltungen der Erfindung ergeben sich aus den Unteransprüchen sowie aus der folgenden Beschreibung. Eine besonders bevorzugte Ausgestaltungsform wird anhand der beigefügten Zeichnungen näher erläutert. In den Zeichnungen zeigen:
- Fig. 1: eine perspektivische Ansicht der Maschine bzw. Maschinenkombination zur Verarbeitung von stabförmigen Artikeln der Tabak verarbeitenden Industrie,
- Fig. 2: eine schematische Darstellung einer Strangmaschine zur Herstellung von Filtersträngen und Filterstäben,
- Fig.3: eine schematische Darstellung eines Ausschnitts der Strangführung und der Heizungseinheit aus der in Fig. 2 dargestellten Maschine,
- Fig. 4: eine schematische Darstellung der Übergabevorrichtung und der Steuerungseinheit der in Fig. 1 dargestellten Maschinenkombination, und
- Fig.5: eine Darstellung der Gewichtsverteilung einer Mehrzahl von Artikeln.

Die im Folgenden beschriebenen Merkmale stellen mögliche Weiterbildungen dar, wobei die Merkmale einzeln oder in Kombination miteinander ausgestaltet sein können. Außerdem sind in den folgenden Figuren jeweils gleiche oder gleichartige bzw. entsprechende Teile mit denselben Bezugsziffern versehen, sodass von einer jeweils erneuten Vorstellung abgesehen wird.

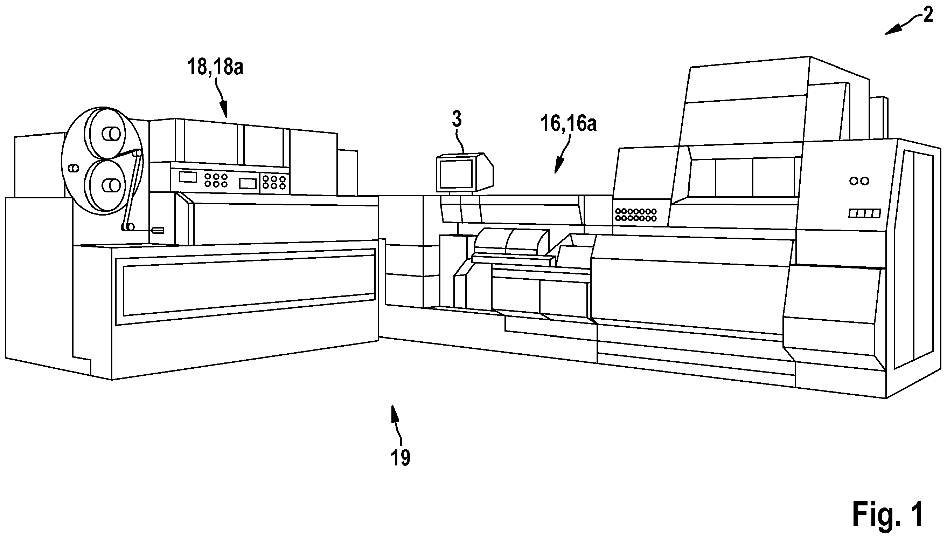

Die Erfindung betrifft ein Verfahren zum Steuern einer Maschinenkombination 2 und/oder einer Maschine 16, 16a, 17, 17a, 18, 18a zur Herstellung von stabförmigen Artikeln 4 der Tabak verarbeitenden Industrie, wie sie beispielsweise aus der Zusammenschau der Fig. 1 bis 4 zu entnehmen ist.

In einer perspektivischen Ansicht zeigt Fig. 1 eine Maschinenkombination 2 zur Verarbeitung von stabförmigen Artikeln 4 der Tabak verarbeitenden Industrie, wobei die Maschinenkombination 2 in den Bereich der Strangmaschine 16a zur Herstellung eines Tabakstrangs und in den Bereich der Filteransetzmaschine 18a unterteilt werden kann. Zum Anzeigen von Informationen weist die Maschinenkombination 2 eine Anzeigeeinheit 3 auf.

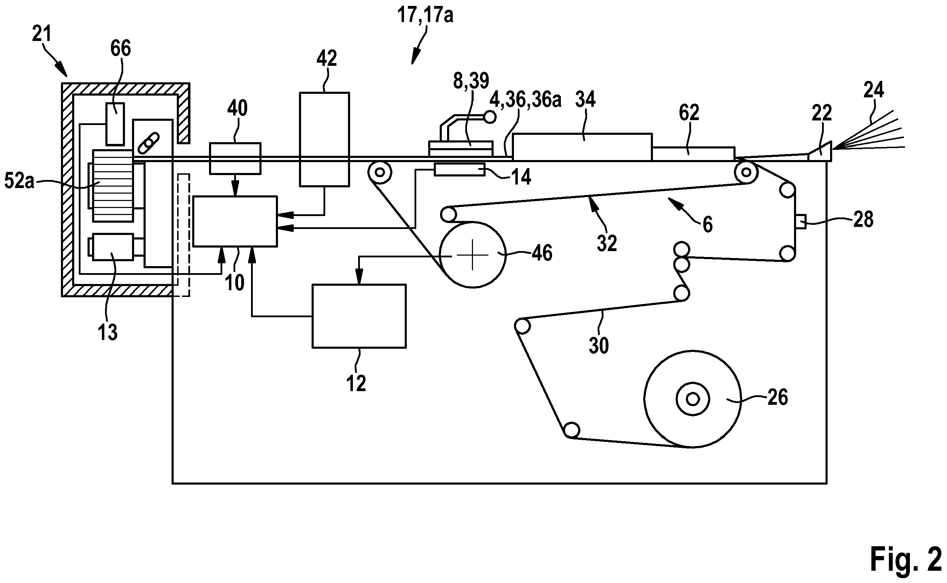

Eine Strangmaschine 17a zur Herstellung von Filterstäben aus einem Filterstrang 36a ist in Fig. 2 schematisch dargestellt. Über eine Einlaufdüse 22 gelangt ein Filtertowstreifen 24 in die Strangmaschine 17a, wo dieser auf einen von einer Bobine 26 abgezogenen und mittels einer Beleimungseinrichtung 28 mit Heißleim versehenen Streifens des Artikelhüllmaterials, auch bezeichnet als Umhüllungsstreifen 30, aufgelegt wird. Der Umhüllungsstreifen 30 und das Filtertow 24 gelangen auf ein endlos umlaufendes Formatband 32, das beide Komponenten durch eine Strangformeinrichtung, auch als Format 34 bezeichnet, führt, das den Umhüllungsstreifen 30 um das Filtertow 24 herumlegt und dabei einen endlosen Filterstrang 36a bildet. Der Filterstrang 36a kann auch als eine Mehrzahl von hintereinander angeordneten Artikeln 4 aufgefasst werden. Dieser Zusammenhang wurde bereits zuvor im Rahmen der Artikelgruppen bzw. Artikelzüge erläutert. Jeder spätere Artikel 4 wird hier noch als zusammenhängender Strang mit seiner Naht an einer Kühleinrichtung 39 vorbeigefördert, in welcher die Klebenaht verfestigt bzw. zumindest im Wesentlichen abgebunden wird. Danach werden die Artikel 4 in längsaxialer Richtung durch eine Artikelsensoreinheit 42 bewegt, die zum Erfassen von physikalischen Eigenschaften des jeweiligen Artikels 4 eingerichtet und/oder ausgestaltet ist. Anschließend werden von dem Filterstrang 36a mittels eines Messerapparates 40 fortlaufend Filterstäbe mehrfacher Gebrauchslänge abgeschnitten, die nachfolgend kurz als Artikel 4 bezeichnet werden. Hiernach werden die Artikel 4 von einer Übergabevorrichtung 21, welche hier als Einstoßtrommel 52a mit einem entsprechenden Antrieb 13 ausgebildet ist, aufgenommen und von ihrer längsaxialen Bewegungsrichtung in eine queraxiale Bewegungsrichtung überführt. Benachbart zur Übergabevorrichtung 21 kann eine Lagesensoreinheit 66 vorgesehen sein, um die Position des Artikels 4 in der jeweiligen Aufnahme 58 der Übergabevorrichtung 21 zu detektieren.

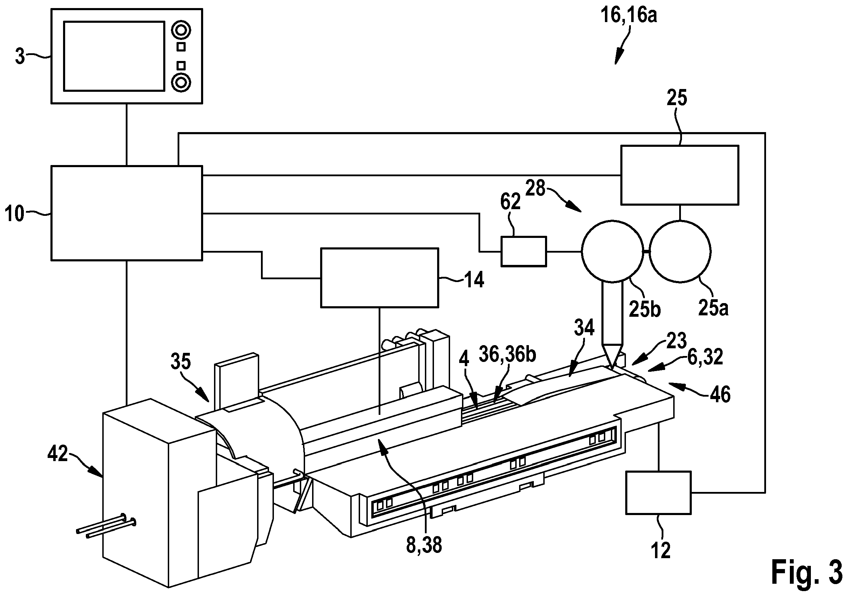

Des Weiteren ist in Fig. 3 ein Ausschnitt aus einer Strangmaschine 16a zur Herstellung eines Tabakstrangs 36b schematisch dargestellt. Über einen Einlaufbereich 23 gelangt Tabak in die Strangmaschine 16a, wo dieser auf einen von einer Bobine 26 abgezogenen und mittels einer Beleimungseinrichtung 28 mit Kaltleim versehenen Streifens eines Artikelhüllmaterials bzw. Umhüllungsstreifens 30 aufgelegt wird. Die Beleimungseinrichtung 28 umfasst dazu einen Antrieb 25 mit einem Motor 25a, der eine zugehörige Leimpumpe 25b antreibt. Der Umhüllungsstreifen 30 und der Tabak gelangen auf ein endlos umlaufendes Formatband 32, das beide Komponenten durch eine Strangformeinrichtung bzw. Format 34 führt, das den Umhüllungsstreifen 30 um den Tabak herumlegt und dabei einen endlosen Tabakstrang 36b bildet. Der Tabakstrang 36b ist virtuell in eine Mehrzahl von hintereinander angeordneten Artikeln 4 teilbar. Anschließend wird der Tabakstrang 36b mit seiner Überlappungsnaht an einer Heizeinrichtung 38 vorbeigeführt, in welcher die Klebenaht verfestigt bzw. unter Wärmeeinwirkung abbindet. In Förderrichtung des Tabakstrangs 36b gesehen hinter der Heizeinrichtung 38 ist ein sogenannter Abschläger 35 angeordnet. Dieser dient zum Umlenken des Tabakstrangs 36b, wenn beispielsweise in einer nachgeordneten Einheit eine Störung aufgetreten ist. Nachfolgend wird der Tabakstrang 36b in längsaxialer Richtung durch eine Artikelsensoreinheit 42 bewegt, die zum Erfassen von physikalischen Eigenschaften des Tabakstrangs 36b bzw. der jeweiligen virtuellen Artikel 4 eingerichtet und/oder ausgestaltet ist. Der Artikelsensoreinheit 42 ist ein Messerapparat (nicht dargestellt) nachgeordnet, der den Tabakstrang 36b fortlaufend in Tabakstöcke mehrfacher Gebrauchslänge schneidet, die dann nachfolgend als stabförmige Artikel oder kurz als Artikel 4 bezeichnet werden. Die Artikel 4 werden anschließend zu einer Übergabevorrichtung 21 gefördert, die die längsaxiale Bewegungsrichtung der Artikel 4 in eine queraxiale Bewegungsrichtung überführt. Von der Artikelsensoreinheit 42, wie sie beispielsweise in der Fig. 2 oder Fig. 3 dargestellt ist, werden vorzugsweise der Durchmesser, die Feuchte und/oder das Gewicht des Tabakstrangs bzw. des virtuellen jeweiligen Artikels 4 erfasst.

Die Strangmaschine 16a, 17a weist bevorzugt eine Bewegungssensoreinheit 12 auf, die zum Erfassen der physikalischen Positions- und/oder Geschwindigkeitsgrößen des Formatbandes 32 der Strangmaschine 16a, 17a eingerichtet und/oder ausgebildet ist.
Eine derartige Bewegungssensoreinheit 12 kann beispielsweise an dem Formatbandantrieb 46 angeordnet sein. Mittels der Bewegungssensoreinheit 12 ist beispielsweise der Drehwinkel des Formatbandantriebes 46 messbar. Mittels des Drehwinkels kann auf die Winkelgeschwindigkeit und somit auf die Geschwindigkeit des Formatbandes 32 und auf deren Position geschlossen werden. Um diese Ermittlungen auszuführen, kann die Bewegungssensoreinheit 12 eine Datenvorverarbeitungseinheit aufweisen.

Um die Heizeinrichtung 38 bzw. die Kühleinrichtung 39 zu steuern, weist die Strangmaschine 16a bzw. 17a eine Steuerungseinheit 10 auf. Darüber hinaus ist für die Strangmaschine 16a, 17a eine Prozesssensoreinheit 14 zum Erfassen der elektrischen und/oder thermischen Leistung der Heizeinrichtung 38 bzw. Kühleinrichtung 39 vorgesehen. Die von den Sensoreinheiten 12, 14, 66 erfassten Eigenschaften werden an die Steuerungseinheit 10 übermittelt, die dazu vorzugsweise mit der Bewegungssensoreinheit 12, der Prozesssensoreinheit 14 und/oder der Lagesensoreinheit 66 verbunden ist.

Das erfindungsgemäße Verfahren eignet sich somit zum Steuern der in den Fig. 1 bis 4 zumindest ausschnittweise dargestellten Maschinen 2 zur Verarbeitung von stabförmigen Artikeln 4 der Tabak verarbeitenden Industrie, wobei das Verfahren die folgenden Schritte umfasst: Fördern der Artikel 4 mittels eines Förderers 6, 32, 48a, 50a der Strangmaschine 16a, 17a, thermisches Einwirken auf die geförderten Artikel 4 mittels einer Wirkeinheit 8, 38, 39, wobei die Wirkeinheit 8, 38, 39 dazu in thermische Wirkverbindung mit den Artikeln 4 gebracht wird, und Steuern der Wirkeinheit 8 mittels einer Steuerungseinheit 10. Dabei kennzeichnet sich das erfindungsgemäße Verfahren durch ein Einstellen der für die Wirkverbindung erforderlichen und/oder energieopimalen Sollleistung der Wirkeinheit 8, 38, 39 mittels der Steuerungseinheit 10 in Abhängigkeit von einem Artikeltypdatensatz und/oder von einem durch den Artikeltypdatensatz aktualisierten Maschinenparametersatz, ein Ermitteln der die Wirkverbindung verursachenden Istleistung der Wirkeinheit 8, 38, 39 durch Messen mindestens einer leistungsrelevanten physikalischen Größe mittels einer Prozesssensoreinheit 14, und/oder ein Aktualisieren des ersten Maschinenparametersatzes, insbesondere der relevanten und vorgebbaren Parameter des Maschinenparametersatzes, auf Basis der ermittelten Istleistung.

Bezug nehmend auf Fig. 2 ist die Strangmaschine 17a ausgebildet, eine Vielzahl verschiedener Typen von Artikeln 4, hier Filterstäbe, zu fertigen. Die Filterstäbe unterscheiden sich beispielsweise in ihrem Filtertowmaterial, ihrem Durchmesser, ihrem Artikelhüllmaterial, ihrer Leimsorte und/oder in der Leimmenge, die notwendig ist, um den Umhüllungsstreifen 30 zu schließen. Derartige Eigenschaften des jeweiligen Artikeltyps sind vorzugsweise in einem Artikeltypdatensatz zusammengefasst. Sollen nun beispielsweise Artikel 4, d. h. Filterstäbe, eines neuen Artikeltyps verarbeitet werden, ist es vorgesehen, bspw. die Sollleistung der Kühleinrichtung 39 in Abhängigkeit von dem zugehörigen Artikeltypdatensatz bzw. von einem Artikeltypdatensatz aktualisierten Maschinenparametersatz einzustellen.

Bezug nehmend auf Fig. 3 ist vorgesehen, dass mittels der Prozesssensoreinheit 14 die die Wirkverbindung verursachende Istleistung der Heizeinrichtung 38 und/oder Kühleinrichtung 39 durch Messen mindestens einer leistungsrelevanten physikalischen Größe dieser Wirkeinheit 8, insbesondere der Temperatur, zu ermitteln. So kann beispielsweise mittels der Prozesssensoreinheit 14 die der in Fig. 3 gezeigten Heizeinrichtung 38 zugeführten elektrische Leistung ermittelt werden und somit auf die an den jeweiligen Artikel 4 übertragende thermische Leistung geschlossen werden. Für die Erfassung der elektrischen Leistung können zunächst der elektrische Strom und/oder die elektrische Spannung gemessen werden. Zudem wird mittels der Prozesssensoreinheit 14, welche einen Temperaturfühler umfasst, die Temperatur am Übergangsbereich zwischen der Heizeinrichtung 38 und dem jeweiligen Artikel 4 erfasst. Da die Abmessungen der Heizeinrichtung 38 und/oder die spezifische Kennlinie der Heizeinrichtung 38 bekannt sind, aus der die jeweilige thermische Leistung in Abhängigkeit der erfassten Temperatur hervorgeht, kann in diesem Fall auch die erfasste Temperatur als eine leistungsrelevante physikalische Größe hinzugezogen werden. Mittels der erfassten Temperatur kann somit auch auf die Istleistung der Heizeinrichtung 38 geschlossen werden. Weicht die Istleistung von der Sollleistung ab, so bedarf es einer Feineinstellung und/oder Aktualisierung der hierfür relevanten Parameter. Es ist deshalb vorgesehen, den Maschinenparametersatz, insbesondere die relevanten und/oder vorgebbaren Parameter des Maschinenparametersatzes, auf Basis der ermittelten Istleistung und/oder im Verhältnis zu der Sollleistung zu aktualisieren.

Insbesondere bei Verwendung von Heißleim ist es von Vorteil, wenn die Wirkeinheit 8 eine Kühleinrichtung 39 in Verbindung mit einem Kühlsteg umfasst. Anhand der gemessenen Temperatur kann auf die Istleistung der Kühleinrichtung 39 geschlossen werden. Weicht diese von der Sollleistung ab, bedarf es einer Aktualisierung des Maschinenparametersatzes.

Die Sollleistung der Heizeinrichtung 38 und/oder Kühleinrichtung 39 hängt auch von der zugeführten Leimmenge ab. Zur Erfassung der aufgetragenen Leimmenge kann eine Leimmengensensoreinheit 62 als eine Artikelsensoreinheit 42 vorgesehen sein. Da die jeweilige Leimmenge zuvor mittels einer Beleimungseinrichtung 28 auf den Umhüllungsstreifen 30 aufgetragen wurde, kann alternativ mittels der bekannten Leimmenge pro Zeiteinheit und in Verbindung mit der Bewegungssensoreinheit 12 auf die Leimmenge pro Artikel 4 bzw. Filterstrangabschnitt oder Tabakstrangabschnitt geschlossen werden. Die Erfassung der Leimmenge kann somit mittels der Leimmengensensoreinheit 62 oder mittels Übertragung der Informationen über die Leimmenge von der stromaufwärts angeordneten Beleimungseinrichtung 28 erfolgen. Beispielhaft wird im Folgenden die Abhängigkeit der Istleistung von der Leimmenge anhand der in Fig. 3 dargestellten Heizeinrichtung 38 erläutert. Die Istleistung der Heizeinrichtung 38, also insbesondere deren thermische Leistung, die an den jeweiligen Artikel 4 bzw. den jeweiligen Filterstrangabschnitt übertragen werden soll, oder die elektrische Leistung, die der Heizeinrichtung 38 zuzuführen ist, hängt von der Art und Menge des aufgetragenen Leimes ab, sodass durch die Veränderung des mindestens einen Parameters des Maschinenparametersatzes in Abhängigkeit von der erfassten Leimmenge des zugeführten Artikels 4 eine qualitäts- und energieoptimierte Einstellung der Maschinenkombination 2 bzw. Strangmaschine 16a ermöglicht wird. Denn zum einen wird sichergestellt, dass die Leistung der Heizeinrichtung 38 ausreicht, damit der Leim abbindet. Zum anderen ist die Soll- bzw. Istleistung an die jeweilige Leimmenge angepasst, sodass nicht mehr aber auch nicht weniger thermische Leistung an den jeweiligen Artikel 4 übertragen wird als notwendig.

Weiterhin kann mittels einer weiteren Artikelsensoreinheit 42 der Durchmesser des von der Heizeinrichtung 38 und/oder der Kühleinrichtung 39 weggeführten Tabakstrangs 36b und/oder Tabakstocks bzw. Filterstrangs 36a und/oder Filterstabs erfasst werden. Dieser wird bevorzugt mit einem Wert für den nominalen Durchmesser gemäß dem Artikeltypdatensatz verglichen. Kommt es dabei zu dem Ergebnis, dass der Durchmesser zu groß ist, kann dafür eine nicht vollständig abgebundene Leimnaht verantwortlich sein. In diesem Fall wäre bei Verwendung von Kaltleim die Leistung der Heizeinrichtung 38 entsprechend anzupassen, nämlich insbesondere zu erhöhen. Entsprechend wäre die Leistung der Kühleinrichtung 39 bei der Verwendung von Heißleim zu verringern.

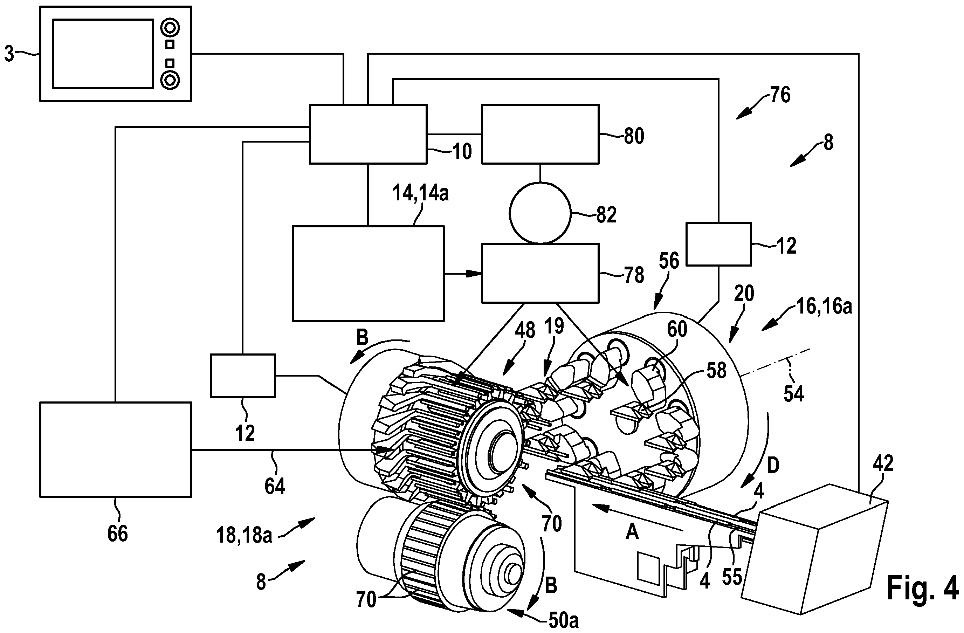

In den vorangegangenen Abschnitten wurden im Wesentlichen die Strangmaschine 16a, 17a und das für die Strangmaschine 16a, 17a anwendbare, erfindungsgemäße Verfahren exemplarisch erläutert. Eingangs wurde jedoch darauf hingewiesen, dass die Maschinenkombination 2, wie sie beispielsweise in Fig. 1 dargestellt ist, auch eine Filteransetzmaschine18, 18a aufweist. Die Anwendbarkeit des Verfahrens auf eine derartige Filteransetzmaschine 18, 18a, wie sie beispielsweise in Fig. 4 dargestellt ist, erfolgt im Wesentlichen entsprechend.

Aus der Fig. 4 ist ein Übergabebereich 19 zwischen der Strangmaschine 16a und der Filteransetzmaschine 18a ersichtlich, der eine entsprechende Darstellung der Übergabevorrichtung 20 und eine Übernahmetrommel 48a umfasst.

Wie aus Fig. 4 hervorgeht, weist die Übergabevorrichtung 20, die aufgrund ihrer hier verwendeten, besonderen Konstruktion auch als "Spinne" bezeichnet wird, einen um eine Drehachse 54 drehbar gelagerten, umlaufenden Träger 56 auf, an dem die Aufnahmen 58 winklig gelagert und somit diesem zugeordnet sind. Konkret sind die Aufnahmen 58 im dargestellten Ausführungsbeispiel paarweise an Trägerarmen 60 befestigt, welche in der vom scheibenförmigen Träger 56 aufgespannten Ebene frei verschwenkbar am Träger 56 gelagert sind. Dabei ist diese Anordnung so ausgestaltet, dass die Aufnahmen 58 bei einer Rotation des umlaufenden Trägers 56 ihre horizontale Ausrichtung beibehalten, wie sich aus Fig. 4 erkennen lässt. Die Aufnahmen 58 senken sich bei der Rotation des umlaufenden Trägers 56 im Uhrzeigersinn gemäß Pfeil D nach unten, wobei sie in der untersten Stellung praktisch die Bewegungsrichtung und Geschwindigkeit der Artikel 4 in längsaxialer Förderrichtung A haben. In dieser Stellung erfassen die Aufnahmen 58 jeweils einen Artikel 4 und heben ihn beim Weiterdrehen des Trägers 56 nach oben von der sogenannten Prismenschiene 55 ab. Während der weiteren Rotation des Trägers 56 legen die Aufnahmen 58 mit den aufgenommenen Artikeln 4 einen Weg auf einer Ellipsenbahn über zumindest annähernd ein Viertel eines Ellipsenumfanges zurück. Sind die Aufnahmen 56 mit dem jeweiligen Artikel 4 an einer Stelle angelangt, an der ihre Bewegung in Bezug auf die Artikel 4 die Längsaxialkomponente zumindest im Wesentlichen zu Null geworden ist, wird der Artikel 4 an die Übernahmetrommel 48a übergeben. Die Artikel 4 werden dazu mittels Saugluft aus Saugöffnungen (nicht dargestellt) der Aufnahmen 70 der Übernahmetrommel 48a angesogen und/oder gehalten, wobei im Wesentlichen gleichzeitig die Saugluft an der jeweiligen Aufnahme 58 der Übergabevorrichtung 20 abgeschaltet wird. Die Übernahmetrommel 48a ist als Muldentrommel ausgebildet, in deren parallel zur Drehachse verlaufenden muldenförmigen Aufnahme 70 die Artikel 4 von den Aufnahmen 58 der Übergabevorrichtungen 20 aufgenommen werden, wozu dann mittels Saugöffnungen in der jeweiligen muldenförmigen Aufnahme 70 der Übernahmetrommel 48a Saugluft angelegt wird. Somit werden die Artikel 4 von der Übergabevorrichtung 20 auf die Übernahmetrommel 48a übertragen und in queraxialer Richtung gemäß Pfeil B abgefördert.

Die operative Schnittstelle zwischen der Übergabevorrichtung 20 und der Übernahmetrommel 48a ist schematisch mittels Lagesensoren 64 einer Lagesensoreinheit 66 abgesichert, wobei die Lagesensoreinheit 66 zum Erfassen des Vorhandenseins der Position und/oder Lage des jeweiligen Artikels 4 zur Steuerung der zugehörigen Wirkeinheit 8 herangezogen wird. Im konkreten Fall kann mittels der Lagesensoreinheit 66 die Position und/oder die Lage des jeweiligen Artikels 4 relativ zu der Übernahmetrommel 48a erfasst werden. Dies umfasst insbesondere die längsaxiale Lage des jeweiligen Artikels 4 in der jeweiligen muldenförmigen Aufnahme 70. Mittels der Lagesensoreinheit 66 kann auch das Vorhandensein bzw. das Nichtvorhandensein eines Artikels 4 in der jeweiligen muldenförmigen Aufnahme 70 erfasst werden.

Insbesondere bei einer Strangmaschine 16a, 17a mit einer Übergabevorrichtung 20, 21 und/oder einer Filteransetzmaschine 18a lässt sich das erfindungsgemäße Verfahren besonders vorteilhaft anwenden. Hierbei ist es von Vorteil, wenn die Wirkeinheit 8 mindestens ein Förderelement 48a, 50a, 56 und eine Unterdruckversorgung 76 umfasst, wobei jedes Förderelement 48a, 50a, 56 eine Mehrzahl von Aufnahmen 58, 70 mit einer Mehrzahl von Saugöffnungen zum Aufnehmen der stabförmigen Artikel 4 aufweist und der zum Halten der stabförmigen Artikel 4 erforderliche Unterdruck mittels der Unterdruckversorgung 76 erzeugt wird, wobei mindestens eine der Saugöffnungen in pneumatische Wirkverbindung mit mindestens einem der Artikel 4 gebracht wird, und wobei die Wirkeinheit 8 die mindestens eine Prozesssensoreinheit 14 aufweist, die den durch die Unterdruckversorgung 76 erzeugten Unterdruck und/oder Luftvolumenstrom erfasst. Somit kann die Übergabevorrichtung 20 mit deren Aufnahmen 58 oder eine der Förderelemente 48a, 50a, beispielsweise die Übernahmetrommel 48a, mit deren muldenförmigen Aufnahmen 70 einen Teil einer entsprechenden Wirkeinheit 8 bilden. Erfindungsgemäß ist es bevorzugt vorgesehen, dass mindestens eine leistungsrelevante physikalische Größe der Wirkeinheit 8 mittels einer Prozesssensoreinheit 14 erfasst wird. Hierzu eignet sich besonders die Erfassung des durch die Unterdruckversorgung 76 erzeugten Unterdrucks und/oder des entsprechenden Luftvolumenstroms mittels eines elektro-pneumatischen Sensors 14a. Beide erfassten Größen eignen sich insbesondere in Kombination dazu, die notwendige Istleistung der Unterdruckversorgung 76, insbesondere die elektrische Leistung eines zugehörigen Gebläses 78 und/oder eines zugehörigen Antriebs 80 mit dessen elektrischen Motor 82, zu ermitteln. Dazu sind die Prozesssensoreinheit 14, 14a und die Unterdruckversorgung 76, insbesondere deren Antrieb 80, mit der Steuerungseinheit 10 verbunden. Um Einstellungen vornehmen zu können und/oder um relevante Daten und/oder Ergebnisse ausgeben zu können, ist die Steuerungseinheit 10 auch mit der Bedien- und Anzeigeeinheit 3 verbunden.

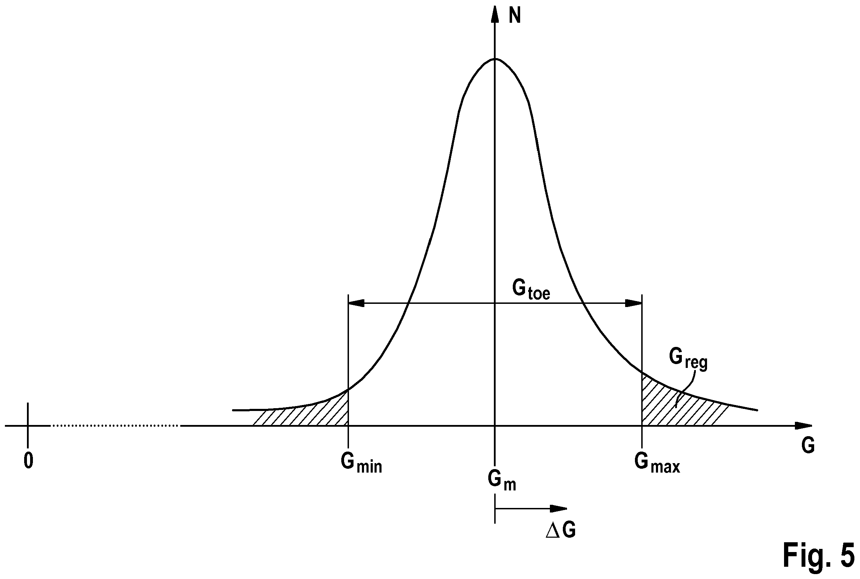

Sofern die Istleistung der Unterdruckversorgung 76 ausreichend groß ist, kann davon ausgegangen werden, dass ein Fördern eines Artikels 4 mittels der Übergabevorrichtung 20 und/oder mittels der Förderelemente 48a, 50a sicher erfolgen kann. Nachteilig ist hierbei jedoch, dass übermäßig viel Energie verbraucht wird. In der Praxis hat sich gezeigt, dass Artikel 4 vom gleichen Artikeltyp in einem gewissen Bereich zumindest in einer ihrer Artikeleigenschaften, beispielsweise ihrem Gewicht, bestimmten Schwankungen unterliegen. Ein entsprechender Sachverhalt geht aus dem Verteilungsdiagramm, wie es in Fig. 5 dargestellt ist, hervor. Dargestellt ist die statistische Verteilung einer Anzahl N der Artikel 4 über die Abweichung ΔG der jeweiligen Artikel 4 von einem mittleren Gewicht Gm der gesamten Artikel 4. Es ist deshalb ein Erfassen einer Geometrie- und/oder Massengröße des zugeführten Artikels 4, insbesondere dessen Durchmesser, Länge und/oder Gewicht, als eine Artikeleigenschaft des zugeführten Artikels 4 mittels einer zugehörigen, insbesondere einer der Wirkeinheit 8 zugehörigen, Artikelsensoreinheit 42, wie sie in Fig. 3 dargestellt ist, von Vorteil.

Die Artikelsensoreinheit 42 wurde bereits zuvor als Artikelsensoreinheit 42 für die Strangmaschine 16a eingeführt und erläutert. Hierbei diente sie zur Erfassung der Artikeleigenschaften der von der Heizeinrichtung 38 weggeführten Strangabschnitte. Die Artikel 4 werden auf ihrem Förderweg durch die Maschinenkombination 2 verfolgt. Es ist somit möglich, die bereits durch die Artikelsensoreinheit 42 erfassten Eigenschaften der Artikel 4 für die nachgeordnete Übergabevorrichtung 20, die Förderelemente 48a, 50a und/oder andere nachgeordnete Wirkeinheiten 8 zu verwenden. Eine Artikelsensoreinheit 42 kann somit eine Doppelfunktion erfüllen, nämlich die Artikeleigenschaften eines von einer ersten Wirkeinheit 8 weggeführten Artikels 4 als auch die Artikeleigenschaften des zu einer nachgeordneten zweiten Wirkeinheit 8, nunmehr zugeführten Artikels 4, zu erfassen. Um insbesondere eine Verfolgung der Artikel 4 zu ermöglichen, kann ein Erfassen der Winkellage des von der Aufnahme 58, 70 des Förderelements 48a, 50a, 56 gehaltenen Artikels 4 mittels einer Bewegungssensoreinheit 12 vorgesehen sein. Die mindestens eine Bewegungssensoreinheit 12 ist ebenfalls mit der Steuerungseinheit 10 verbunden. Nicht immer ist es gewünscht, dass die Maschinenkombination 2 energieoptimiert betrieben wird. Beispielsweise sind während einer Testphase andere Maschineneinstellungen von Vorteil. Neben dem Testbetrieb können ein Nominalbetrieb oder ein Nennbetrieb und/oder ein anschlussmaschinengeführter Betrieb vorgesehen sein. Ist für einen energieoptimierten Betrieb der Maschinenkombination 2 bereits ein hierauf abgestellter Maschinenparametersatz in der Steuerungseinheit 10 gespeichert, kann dieser verwendet werden, um die entsprechenden Einstellungen der Maschinenkombination 2 vorzunehmen. Überraschenderweise können verschiedene Chargen von Artikeln 4, trotz ihrer Zugehörigkeit zu einem bestimmten Artikeltyp, zumindest in einer ihrer Artikeleigenschaft abweichend ausgebildet sein. Insbesondere um die Maschinenkombination 2 oder deren einzelne Maschinen 16a, 18a oder eine Strangmaschine 17a für die Filterstrangherstellung an eine derartige Charge von Artikeln 4 anzupassen, ist für das erfindungsgemäße Verfahren ein Einrichtbetrieb der Maschine 16, 17, 18 vorgesehen, das folgende Schritte umfasst: Erfassen von Artikeleigenschaften eines der jeweiligen Wirkeinheit 8 zugeführten und/oder von der Wirkeinheit 8 weggeführten Artikels 4 mittels einer Artikelsensoreinheit 42 in Verbindung mit einer Lagesensoreinheit 66, welche die Position in einer Aufnahme 58, 70 des Förderelements 48a, 50a, 56 detektiert, Verringern der Sollleistung durch ein entsprechendes Verändern mindestens eines Parameters des ersten Maschinenparametersatzes bis die Position eine vorgegebene Toleranzgrenze erreicht und Aktualisieren des mindestens einen Parameters oder des entsprechenden Parametersatzes des ersten Maschinenparametersatzes, der zu der bevorzugt um einen Sicherheitsfaktor und/oder -wert beaufschlagten, verringerten Sollleistung korrespondiert und Speichern eines zweiten Maschinenparametersatzes, der zu der bevorzugt um einen Sicherheitsfaktor und/oder -wert beaufschlagten, verringerten Sollleistung korrespondiert, und zwar in einem Datenspeicher der wenigstens einen Steuerungseinheit 10. Somit kann der Energieverbrauch der Maschine 16, 17, 18 verringert werden, ohne Funktionseinbußen bei der Förderung der Artikel 4 hinnehmen zu müssen. Da die Artikeleigenschaften einer gewissen Schwankung, wie sie beispielsweise aus Fig. 5 zu entnehmen ist, unterliegen kann, wird die ermittelte Sollleistung mit einem Sicherheitsfaktor und/oder einem Sicherheitswert beaufschlagt. Um die Maschinen 16, 17, 18 entsprechend einzustellen, findet eine Aktualisierung des mindestens einen Parameters oder des entsprechenden Parametersatzes des ersten Maschinenparametersatzes der jeweiligen Maschine 16, 17, 18 statt, der zu der bevorzugt um einen Sicherheitsfaktor und/oder Wert beaufschlagten, verringerten Sollleistung korrespondiert. Um die so gefundenen Maschinenparameter auch für einen späteren Betrieb der Maschinen 16, 17, 18 verwenden zu können, ist es von Vorteil, einen zweiten Maschinenparametersatz zu speichern, der zu der bevorzugt um einen Sicherheitsfaktor und/oder -wert beaufschlagten, verringerten Sollleistung korrespondiert. Dies kann mittels eines Datenspeichers der jeweiligen Maschine 16, 17, 18 erfolgen.

Der zuvor bereits erwähnten Fig. 5 ist des Weiteren ein vorgebbarer Artikeltoleranzbereich Gtol zu entnehmen. Die weiteren Erläuterungen beziehen sich beispielhaft auf das Gewicht G eines Artikels 4, gelten aber entsprechend für alle weiteren Artikeleigenschaften. Wird zunächst davon ausgegangen, dass ein bestimmter Artikeltyp ein mittleres Gewicht Gm aufweist, so hat sich in der Praxis gezeigt, dass die Gewichtsabweichung ΔG von diesem mittleren Gewicht Gm eine Gauß'sche Verteilung über die Anzahl N der Artikel 4 ist. Wird nun ein Gewicht G eines Artikels 4 zwischen einem minimalen Gewicht Gmin und einem maximalen Gewicht Gmax als zulässig erachtet, bestimmt sich daraus, wie in Fig. 5 gezeigt, ein bestimmter Toleranzbereich Gtol für das Gewicht G. Überschreitet das Gewicht G eines Artikels 4 die Gewichtsgrenze Gmax, so wird dieser Artikel 4 an geeigneter Stelle aus der Maschinenkombination 2 ausgeschleust. Ist der Artikel 4 beispielsweise zu schwer, kann möglicherweise der Artikel 4 von der Saugluft nicht korrekt gehalten werden und somit auch keinen korrekten Sitz bzw. keine korrekte Position in der Aufnahme 58, 70 aufweisen. Entsprechendes kann für einen zu leichten Artikel 4, dessen Gewicht geringer als das minimale Gewicht Gmin ist, gelten. Für diese Artikel 4, die außerhalb des zuvor erläuterten Toleranzbereiches Gtol sind, ist es nicht notwendig, die Leistung einer Wirkeinheit 8 der Maschine 2 anzupassen, da diese Artikel 4 ausgeschleust werden. Es hat sich deshalb ein Registrieren oder ein virtuelles Kennzeichnen jeweils des Artikels 4 als vorteilhaft herausgestellt, dessen mindestens eine Artikeleigenschaft außerhalb eines vorgebbaren Artikeltoleranzbereiches Gtol für Artikel 4 ist, wobei die Artikeleigenschaft des registrierten Artikels 4 bei der Veränderung des mindestens einen bzw. gekennzeichneten Parameters des ersten Maschinenparametersatzes unberücksichtigt bleibt. Damit ist es besonders einfach möglich, den Energieverbrauch der Maschinenkombination 2 auf einem möglichst geringen Niveau zu halten, ohne die Funktionssicherheit zu gefährden.

Die Informationen über die Sitzposition der jeweiligen Artikel 4 können mit den ermittelten Artikeleigenschaften des jeweiligen Artikels 4 kombiniert werden, um den Energiebedarf der Maschine 16, 17, 18 möglichst gering zu halten. In der Praxis hat sich deshalb ein Erhöhen der die Wirkverbindung verursachenden Sollleistung, insbesondere des zugehörigen Unterdrucks und/oder des zugehörigen Volumenstroms als vorteilhaft erwiesen, wenn die Sitzposition des geförderten Artikels 4 außerhalb eines vorgegebenen Sitzpositionstoleranzbereiches, insbesondere wenn die längsaxiale Sitzposition außerhalb eines vorgegebenen Abschnittes der zugehörigen Aufnahme 58, 70 mit Saugöffnungen ist, oder wenn ein Verlust eines zugeführten Artikels 4, basierend auf der mittels der Lagesensoreinheit 66 erfassten Sitzposition, detektiert wird. Mit anderen Worten wird auf diese Weise sichergestellt, dass das Fördern der Artikel sicher gewährleistet ist, indem die Istleistung an eine korrespondierende Sollleistung angepasst wird.

Zuvor wurde erläutert, dass der Energieverbrauch in der Weise verringert werden kann, dass die Artikel 4 mit tolerierten Artikeleigenschaften korrekt weitergefördert und weiterverarbeitet werden können. Für Artikel 4, die beispielsweise ein zu hohes Gewicht oder andere nicht tolerierte Eigenschaften aufweisen, erfolgt ein nachfolgendes Ausschleusen, da mindestens eine Eigenschaft bzw. ein Parameter außerhalb eines zugehörigen Parametertoleranzbereiches liegt. In diesem Zusammenhang ist auch ein Aktualisieren des Parametertoleranzbereiches in Abhängigkeit eines neuen Artikeltypdatensatzes und/oder eines neuen Maschinenparametersatzes von Vorteil. Da die Maschine 16, 17, 18 in Abhängigkeit des jeweiligen Artikeltypdatensatzes der Artikel 4 angepasst ist, wird auch der zugehörige Parametertoleranzbereich für den jeweiligen Maschinenparametersatz geprüft und gegebenenfalls nachgeführt. So ist der Leistungsbedarf der jeweiligen Wirkeinheit 8 bei der Verarbeitung von Artikeln 4 mit einem geringen Nominalgewicht ebenfalls geringer als bei der Verarbeitung von Artikeln 4 mit einem höheren Nominalgewicht. Insbesondere um die Vorteile des Verfahrens auch während des Betriebes zu verdeutlichen, ist ein Anzeigen der Soll- und/oder Istleistung der Wirkeinheit 8 vorgesehen. Vorzugsweise erfolgt die Anzeige in grafischer Form, wobei sich ein Farbumschlag - ähnlich einer Lichtzeichenanlage - als besonders vorteilhaft erwiesen hat. Somit wird der Bediener der Maschine 16, 17, 18 besonders einfach auf die Optimierung hingewiesen. Ferner ist ein Anzeigen einer Leistungsabweichung zwischen der Istleistung der Wirkeinheit 8 und der Sollleistung der Wirkeinheit 8 von Vorteil, um das Einsparungspotential noch deutlicher darzustellen. Zusätzlich oder alternativ lassen sich für den Fachmann, insbesondere Wartungstechniker, die elektrische Arbeit und/oder die Energie und/oder die CO₂-Bilanz ermitteln und mittels einer Anzeigeeinheit 3 der Maschine 16, 17, 18 zur Anzeige bringen.

Eine weitere vorteilhafte Ausgestaltung der Erfindung betrifft insbesondere den Bereich der Filteransetzeinheit einer Maschine beziehungsweise Maschinenkombination 2. Hier werden beispielsweise die Artikel 4, insbesondere die Filterstäbe, im Bereich des Filteransetzens mit Unterdruck auf Trommeln (bzw. Rotationskörpern) gehalten und für die Bearbeitung positioniert. Die in diesem Fertigungsprozess auf die Artikel wirkenden Kräfte (Zentrifugal- und/oder Beschleunigungskräfte) sorgen bei schweren Artikeln eher dafür, dass diese durch den anliegenden Unterdruck nicht mehr gehalten werden können und abfliegen. Besonders bevorzugt wird dabei das ungewollte Verlassen einer Aufnahme-, Transport- und/oder Bearbeitungsposition eines Artikels, insbesondere Filterstabs, sensorisch überwacht. Die Information über das ungeplante Verlassen einer Aufnahme-, Transport- und/oder Bearbeitungsposition wird dann mit der Information über das gemessene Gewicht des Artikeles verknüpft. Liegt das Gewicht des Artikels in dem Bereich zu schwerer Artikel, ist dieses eine Indikation für einen Unterdruck an der Grenze zu bevorstehenden Produktionsstörungen. Verursacht ist dies beispielsweise durch Verschleiß eines Gebläselüfterrads oder Verschmutzung von Luftkanälen, so dass der effektive Unterdruck während der fortlaufenden Produktion abnimmt. Durch die Anpassung des Maschinenparametersatzes und/oder weitere Parameter kann der Unterdruck durch die Steuerung über die Gebläsedrehzahl etwas vergrößert werden, so dass es zu keinen Produktionsstörungen kommt.

Die zuvor genannten Merkmale der Erfindung können auch im Einrichtbetrieb der Maschine bzw. Maschinenkombination 2 Anwendung finden. So kann der Unterdruck soweit reduziert werden, bis die schweren Artikel, insbesondere Filterstäbe abfliegen, um dann zur Produktionssicherung den Unterdruck etwas zu erhöhen. Die korrespondierenden Einstellungen für den spezifizierten Artikel werden dann vorzugsweise mittels des Maschinenparametersatzes gespeichert und stellt den oder die energieoptimierten Wert dar. Sollten bei diesen Einstellungen dennoch Artikel, insbesondere Filterstäbe, abfliegen, stellt dies eine Indikation für Verschmutzung der Saugbohrungen oder Verschleiß des Gebläses (z.B. Lüfterrad) dar. Dies kann dem Bediener mittels der Bedien- und Anzeigeeinheit 3 dargestellt werden. Die gleichen Informationen können auch einem überlagerten Wartungstool zur Verfügung gestellt werden. Um die Produktionsfähigkeit der Maschine beziehungsweise Maschinenkombination weiterhin sicher zu stellen, ist es bevorzugt, den Unterdruck über die Gebläsedrehzahl zu erhöhen. Jedoch wird die aufgenommene Energiemenge größer, was dem Bediener oder dem Wartungstool über die Anzeige- und Bedieneinheit, insbesondere ein Touch-Display, oder eine Maschinenschnittstelle über eine ,Ampelfunktion" (grün: Energieaufnahme normal, gelb: Energieaufnahme erhöht und Aufnahme in Wartungsreport, rot: Energieaufnahme deutlich zu hoch, dringend erforderliche Wartung) kenntlich gemacht wird.

Um nicht jede Bearbeitungs- und/oder Transporttrommel sensorisch auf abfliegende Artikel, insbesondere Filterstäbe, überwachen zu müssen, werden bevorzugt diejenigen Trommeln überwacht, bei denen die größten Kräfte auf die Artikel einwirken oder diejenigen Trommeln, die durch die Form der Bearbeitung keine Muldenform zulassen, die ein optimales Halten der Produktstäbe durch Unterdruck gewährleisten. In heutigen Filteransetzmaschinen sind das beispielsweise die Lasertrommel oder die Vorrichtung zum Wenden der Produktstäbe (Kegeltrommeln oder Zahnstangenwender).

Mit den zuvor erläuterten Funktion können Gebläse im optimalen Arbeitspunkt betrieben werden und es wird gewährleistet, dass nur die tatsächlich benötigte Energiemenge aufgenommen wird.

### Bezugszeichenliste:

- 2: Maschinenkombination
- 3: Bedien- und Anzeigeeinheit
- 4: Artikel
- 6: Förderer
- 8: Wirkeinheit
- 10: Steuerungseinheit
- 12: Bewegungssensoreinheit
- 13: Antrieb
- 14: Prozesssensoreinheit
- 14a: elektro-pneumatischer Sensor
- 16: Maschine
- 16a: Strangmaschine (zur Herstellung des Tabakstrangs)
- 17: Maschine
- 17a: Strangmaschine (zur Herstellung des Filterstrangs)
- 18: Maschine
- 18a: Filteransetzmaschine
- 19: Übergabebereich
- 20: Übergabevorrichtung (hier: Spinne)
- 21: Übergabevorrichtung mit Einstoßtrommel
- 22: Einlaufdüse
- 23: Einlaufbereich des Formats
- 24: Artikelfüllmaterial, insbesondere Filtertowstreifen
- 25: Antrieb der Beleimungseinheit
- 25a: Motor der Beleimungseinheit
- 25b: Leimpumpe
- 26: Bobine
- 28: Beleimungseinrichtung
- 30: Artikelhüllmaterial
- 32: Formatband
- 34: Strangformeinrichtung, insbesondere Format
- 35: Abschläger
- 36: Faserstrang
- 36a: Faserstrang, insbesondere Filterstrang
- 36b: Faserstrang, insbesondere Tabakstrang
- 38: Heizeinrichtung
- 39: Kühleinrichtung
- 40: Messerapparat
- 42: Artikelsensoreinheit
- 46: Formatbandantrieb
- 48a: Übernahmetrommel
- 50a: Förderelement
- 52a: Einstoßtrommel
- 54: Drehachse
- 55: Prismenschiene
- 56: Träger
- 58: Aufnahmen
- 60: Trägerarm
- 62: Leimmengensensor
- 64: Lagesensor
- 66: Lagesensoreinheit
- 70: Aufnahmen
- 76: Unterdruckversorgung
- 78: Gebläse
- 80: Antrieb
- 82: Motor

## Patentansprüche

1. Verfahren zum Steuern einer Maschinenkombination (2) und/oder einer Maschine (16, 17, 18) zur Herstellung von stabförmigen Artikeln (4) der Tabak verarbeitenden Industrie, umfassend die Schritte:
a. Fördern der Artikel (4) mittels eines Förderers (6, 32, 48a, 50a, 52a) der Maschine (16, 17, 18),
b. thermisches oder pneumatisches Einwirken auf die geförderten Artikel (4) mittels wenigstens einer Wirkeinheit (8, 38, 39, 78) der Maschine (16, 17, 18), wobei die Wirkeinheit (8, 38, 39, 78) dazu in thermische beziehungsweise pneumatische Wirkverbindung mit dem mindestens einen Artikel (4) gebracht wird,
c. Steuern der Wirkeinheit (8, 38, 39, 78) mittels einer Steuerungseinheit (10) der Maschine (16, 17, 18),
d. Einstellen der für die Wirkverbindung erforderlichen, energieoptimalen Sollleistung der Wirkeinheit (8, 38, 39, 78) mittels der Steuerungseinheit (10) in Abhängigkeit von einem Artikeltypdatensatz oder von einem durch den Artikeltypdatensatz aktualisierten, ersten Maschinenparametersatz, wobei unter einer energieoptimalen Sollleistung der Wert der Leistung verstanden wird, der für eine sichere Funktion der Maschine unter Berücksichtigung der Energiebilanz erforderlich ist,
e. Überwachen der Wirkeinheit (8, 38, 39, 78) mittels wenigstens einer Bewegungssensoreinheit (12),
f. Ermitteln der die Wirkverbindung verursachenden Istleistung der Wirkeinheit durch Messen mindestens einer leistungsrelevanten physikalischen Größe der Wirkeinheit (8, 38, 39, 78) mittels einer Prozesssensoreinheit (14), und
g. Aktualisieren des ersten Maschinenparametersatzes, insbesondere der relevanten und vorgebbaren Parameter des Maschinenparametersatzes, auf Basis der ermittelten Istleistung, sowie
einen Einrichtbetrieb der Maschinen (16, 17, 18) umfassend die Schritte:
h. Erfassen von Artikeleigenschaften eines durch die Wirkeinheit (8, 38, 39, 78) geförderten und/oder geführten und/oder von der Wirkeinheit (8, 38, 39, 78) weggeführten Artikels (4) mittels einer Lagesensoreinheit (66) und/oder einer Artikelsensoreinheit (41, 42),
i. Ermitteln der Qualität und/oder der Lageposition des geförderten, geführten und/oder weggeführten Artikels (4) basierend auf den jeweiligen Artikel eigenschaften mittels der oder einer weiteren Steuerungseinheit (10),
j. Verringern der Sollleistung durch ein entsprechendes Verändern mindestens eines der Parameter des ersten Maschinenparametersatzes bis die Qualität oder die Lageposition des Artikels auf dem wenigstens einen Förderer (6, 32, 48a, 50a, 52a) eine vorgegebene Grenze erreicht, und
k. Aktualisieren des mindestens einen Parameters oder des ersten Maschinenparametersatzes, der zu der um einen Sicherheitsfaktor und/oder -wert beaufschlagten, verringerten Sollleistung korrespondiert und
1. Speichern eines zweiten Maschinenparametersatzes, der zu der um einen Sicherheitsfaktor und/oder -wert beaufschlagten, verringerten Sollleistung korrespondiert, in einem Datenspeicher der Maschine (16, 17, 18).

2. Verfahren nach Anspruch 1, **gekennzeichnet durch** ein Erfassen von mindestens einer Artikeleigenschaft eines der Wirkeinheit (8, 38, 39, 78) zugeführten Artikels (4) mittels mindestens einer weiteren Artikelsensoreinheit (41, 42) oder mittels Übertragung der mindestens einen Artikeleigenschaft von einer stromaufwärts angeordneten Einheit der Maschine (16, 17, 18) oder eines zugehörigen Speichers, und ein Verändern mindestens eines Parameters des ersten Maschinenparametersatzes in Abhängigkeit von der mindestens einen erfassten Artikeleigenschaft des zugeführten Artikels (4).

3. Verfahren nach einem der vorhergehenden Ansprüche, **gekennzeichnet durch** ein Erfassen von mindestens einer Artikeleigenschaft eines der durch die Wirkeinheit (8, 38, 39, 78) geförderten und/oder geführten und/oder von der Wirkeinheit (8, 38, 39, 78) weggeführten Artikels (4) mittels der Prozesssensoreinheit (14) und/oder einer weiteren Artikelsensoreinheit (41, 42), und ein Verändern mindestens eines Parameters des ersten Maschinenparametersatzes in Abhängigkeit von der mindestens einen erfassten Artikeleigenschaft des geführten und/oder weggeführten Artikels (4).

4. Verfahren nach einem der vorhergehenden Ansprüche 1-3, **gekennzeichnet durch** ein Registrieren und/oder virtuelles Kennzeichnen eines zugeführten Artikels (4), dessen mindestens eine Artikeleigenschaft außerhalb eines vorgegebenen Artikeltoleranzbereichs für die Artikel (4) ist, wobei die Artikeleigenschaft des registrierten und/oder gekennzeichneten Artikels (4) bei der Veränderung des mindestens einen Parameters des ersten Maschinenparametersatzes unberücksichtigt bleibt.

5. Verfahren nach Anspruch 4, **gekennzeichnet durch** ein Anzeigen einer Warnmeldung mittels einer Anzeigeeinheit (3) der Maschine (16, 17, 18), wenn die Artikeleigenschaft eines Artikels (4) außerhalb eines vorgegebenen Artikeltoleranzbereiches ist, ein Verfolgen eines Artikels (4) während des Förderns, und ein Ausschleusen des die Warnmeldung verursachenden Artikels (4).

6. Verfahren nach einem der vorhergehenden Ansprüche 2-5, **gekennzeichnet durch** ein Anzeigen der Soll- und/oder Istleistung der Wirkeinheit (8, 38, 39, 78), einer Leistungsabweichung zwischen der Istleistung der Wirkeinheit (8, 38, 39, 78) und der Sollleistung der Wirkeinheit (8, 38, 39, 78), einer in Abhängigkeit der Leistungsabweichung über einen vorgegebenen Zeitraum ermittelten Energie, und/oder einer zu der Energie korrespondierenden CO2-Bilanz, insbesondere CO2-Verminderung, und zwar jeweils mittels der Anzeigeeinheit (3) der Maschine (16, 17, 18).

7. Verfahren nach einem der vorhergehenden Ansprüche, **dadurch gekennzeichnet, dass** die Wirkeinheit (8, 38, 39, 78) eine Heizeinrichtung (38) und/oder eine Kühleinrichtung (39) umfasst, insbesondere einen Heiz- und/oder Kühlsteg, die beziehungsweise der jeweils in thermische Wirkverbindung mit mindestens einem der Artikel (4) gebracht wird, und dass die Prozesssensoreinheit (14) die Temperatur der Heizeinrichtung (38) und/oder der Kühleinrichtung (39) ermittelt.

8. Verfahren nach Anspruch 7, **gekennzeichnet durch** ein Erfassen einer Leimmenge für einen zugeführten Artikel (4) als zumindest eine der Artikeleigenschaften des zugeführten Artikels (4), und/oder ein Erfassen einer Geometriegröße und/oder einer Massengröße eines der weggeführten Artikel (4), wie dessen Durchmesser, Länge, Gewicht, Dichte und/oder Feuchte, als eine Artikeleigenschaft des weggeführten Artikels (4).

9. Verfahren nach dem vorangehenden Anspruch, **dadurch gekennzeichnet, dass** die Leistung der Heizeinrichtung (38) und/oder der Kühleinrichtung (39) verändert wird, wenn der erfasste Durchmesser größer als ein maximal zulässiger Durchmesser ist.

10. Verfahren nach einem der vorhergehenden Ansprüche 1-6, **dadurch gekennzeichnet, dass** die Wirkeinheit (8, 38, 39, 78) mindestens ein Förderelement (48a, 50a, 52a, 56) und eine Unterdruckversorgung (76, 78, 80, 82) umfasst, wobei jedes Förderelement (48a, 50a, 52a, 56) eine Mehrzahl von Aufnahmen (58, 70) mit einer Mehrzahl von Saugöffnungen zum Aufnehmen der stabförmigen Artikel (4) aufweist und der zum Halten der stabförmigen Artikel (4) erforderliche Unterdruck mittels der Unterdruckversorgung (76, 78, 80, 82) erzeugt wird, mindestens einer der Saugöffnungen in pneumatische Wirkverbindung mit mindestens einem der Artikel (4) gebracht wird, und dass die Wirkeinheit (8, 38, 39, 78) die mindestens eine Prozesssensoreinheit (14) aufweist, die den durch die Unterdruckversorgung (76, 78, 80, 82) erzeugten Unterdruck und/oder Luftvolumenstrom mittels eines Unterdrucksensors (14a) und/oder Volumenstromsensors erfasst.

11. Verfahren nach Anspruch 10, **gekennzeichnet durch** ein Erfassen einer Geometrie- und/oder Massengröße des zugeführten Artikels (4), wie dessen Durchmesser, Länge und/oder Gewicht, als eine Artikeleigenschaft des zugeführten Artikels (4) mittels der zugehörigen Artikelsensoreinheit (41, 42), ein Erfassen einer Sitzposition des geförderten Artikels (4) an der jeweiligen Aufnahme (58, 70) mittels der zugehörigen Lagesensoreinheit (66), und ein Erfassen der Winkellage des von der Aufnahme (58, 70) des Förderelements (48a, 50a, 52a, 56) gehaltenen Artikels (4) mittels der Bewegungssensoreinheit (44).

12. Verfahren nach einem der Ansprüche 10 oder 11, **gekennzeichnet durch** ein Erhöhen der die Wirkverbindung verursachenden Sollleistung, insbesondere des zugehörigen Unterdrucks und/oder des zughörigen Luftvolumenstroms, wenn die längsaxiale Sitzposition des geförderten und/oder geführten Artikels (4) außerhalb eines vorgegebenen Sitzpositiontoleranzbereiches eines vorgegebenen Abschnittes der zugehörigen Aufnahme (58, 70) mit Saugöffnungen ist, oder wenn ein Verlust eines zugeführten Artikels (4) von der Lagesensoreinheit (66) mittelbar erfassten Sitzposition detektiert wird.

13. Maschinenkombination (2) zur Herstellung von stabförmigen Artikeln (4) der Tabak verarbeitenden Industrie, umfassend eine Strangmaschine (16, 16a, 17, 17a), die eine Zuführeinheit zum Zuführen eines Artikelfüllmaterials (24), eine weitere Zuführeinheit zum Zuführen eines Artikelhüllmaterials (30), eine Beleimungseinrichtung (28) zum Auftragen von Leim auf das Artikelhüllmaterial (30), eine Strangformeinrichtung (34) zum Umlegen des Artikelhüllmaterials (30) um das Artikelfüllmaterial (24) und einer Heizeinrichtung (38) und/oder einer Kühleinrichtung (39) zum Trocknen und/oder Aushärten des aufgetragenen Leims und als Förderer (6) des Artikel (4) ein Formatband (32) zum Fördern des beleimten Artikelhüllmaterials (30) zusammen mit dem Artikelfüllmaterial (24) aufweist, eine umlaufende Übergabevorrichtung (20), die eine Unterdruckversorgung (76, 78, 80, 82) und mindestens ein Förderelement (52a, 56), zum Aufnehmen von längsaxial geförderten Artikeln (4) und zum Abgeben der umlaufenden Artikel (4) an ein queraxial abförderndes Förderelement (48a, 50a), oder umgekehrt, aufweist, wobei jedes Förderelement (48a, 50a, 52a, 56) Aufnahmen (58, 70) mit Saugöffnungen zum Aufnehmen der stabförmigen Artikel (4) aufweist und die Unterdruckversorgung (76, 78, 80, 82) zum Erzeugen des zum Halten der stabförmigen Artikel (4) erforderliche Unterdrucks eingerichtet und ausgebildet ist, und/oder einer Querfördereinheit einer Artikelzusammenstelleinheit oder einer Filteransetzeinheit (18, 18a), jeweils mit einem Förderelement (48a, 50a), ausgebildet und eingerichtet zum queraxialen Fördern stabförmiger Artikel (4), einer rotierend angetriebenen Antriebswelle sowie einem der Antriebswelle zugeordneten Trommelkörper, wobei der Trommelkörper auf seiner äußeren Mantelfläche Aufnahmen (70) mit Saugöffnungen zum Aufnehmen und Halten der stabförmigen Artikel (4) aufweist und der zum Halten der stabförmigen Artikel (4) erforderliche Unterdruck mittels einer Unterdruckversorgung (76, 78, 80, 82) erzeugbar ist, **dadurch gekennzeichnet, dass**
die Maschinekombination (2) mit der Heizeinrichtung (38) und/oder der Kühleinrichtung (39) als Wirkeinheit (8, 38, 39) und/oder mit den Aufnahmen (58, 70), insbesondere einer Filteransetzeinheit (18, 18a) und/oder einer Übergabevorrichtung (20), den Saugöffnungen und der damit verbundenen Unterdruckversorgung (76, 78, 80, 82) als Wirkeinheit (8, 38, 39) betrieben ist, die angepasst ist, nach einem Verfahren gemäß einem der Ansprüche 1 bis 12 betrieben zu werden, und wobei die Maschine (16, 17, 18) mindestens eine Steuerungseinheit (10), mindestens eine Bewegungssensoreinheit (12), mindestens eine Prozesssensoreinheit (14, 14a), mindestens eine Artikelsensoreinheit (41, 42, 43), mindestens eine Lagesensoreinheit (66) und eine Anzeigeeinheit (3) aufweist, die zum Ausführung des Verfahrens ausgebildet und eingerichtet sind.

## Claims

1. Method for controlling a machine line (2) and/or a machine (16, 17, 18) for producing rod-shaped articles (4) of the tobacco-processing industry, comprising the steps:
a. conveying the articles (4) by means of a conveyor (6, 32, 48a, 50a, 52a) of the machine (16, 17, 18),
b. thermal or pneumatic action on the conveyed articles (4) by means of at least one operating unit (8, 38, 39, 78) of the machine (16, 17, 18), wherein, for this purpose, the operating unit (8, 38, 39, 78) is brought into thermal or pneumatic operative connection with the at least one article (4),
c. controlling the operating unit (8, 38, 39, 78) by means of a control unit (10) of the machine (16, 17, 18),
d. setting the energy-optimal setpoint output, required for the operative connection, of the operating unit (8, 38, 39, 78) by means of the control unit (10) as a function of an article-type dataset or of a first machine parameter set updated by the article-type dataset, wherein an energy-optimal setpoint output refers to the value of the output which is required for reliable functioning of the machine taking into account the energy balance,
e. monitoring the operating unit (8, 38, 39, 78) by means of at least one movement sensor unit (12),
f. determining the actual output of the operating unit which brings about the operative connection by measuring at least one output-relevant physical variable of the operating unit (8, 38, 39, 78) by means of a process sensor unit (14), and
g. updating the first machine parameter set, in particular the relevant and predefinable parameters of the machine parameter set, on the basis of the determined actual output, as well as
a set-up mode of the machines (16, 17, 18) comprising the steps:
h. detecting article properties of an article (4) conveyed and/or guided through the operating unit (8, 38, 39, 78) and/or guided away from the operating unit (8, 38, 39, 78) by means of a position sensor unit (66) and/or an article sensor unit (41, 42),
i. determining the quality and/or the position of the conveyed, guided and/or guided-away article (4) on the basis of the respective article properties by means of the or a further control unit (10),
j. reducing the setpoint output by a corresponding change in at least one of the parameters of the first machine parameter set until the quality or the position of the article on the at least one conveyor (6, 32, 48a, 50a, 52a) reaches a predefined limit, and
k. updating the at least one parameter or the first machine parameter set which corresponds to the reduced setpoint output which is subject to a safety factor and/or value and
1. storing a second machine parameter set which corresponds to the reduced setpoint output which is subject to a safety factor and/or value in a data store of the machine (16, 17, 18).

2. Method according to claim 1, **characterised by** a detection of at least one article property of an article (4) fed to the operating unit (8, 38, 39, 78) by means of at least one further article sensor unit (41, 42) or by means of transmission of the at least one article property from a unit arranged upstream of the machine (16, 17, 18) or an associated store, and a change in at least one parameter of the first machine parameter set as a function of the at least one detected article property of the fed article (4).

3. Method according to any one of the preceding claims, **characterised by** a detection of at least one article property of an article (4) conveyed and/or guided through the operating unit (8, 38, 39, 78) and/or guided away from the operating unit (8, 38, 39, 78) by means of the process sensor unit (14) and/or a further article sensor unit (41, 42), and a change in at least one parameter of the first machine parameter set as a function of the at least one detected article property of the guided and/or guided-away article (4).

4. Method according to any one of the previous claims 1-3, **characterised by** a registration and/or virtual identifying of a fed article (4), at least one article property of which is outside a predefined article tolerance range for the articles (4), wherein the article property of the registered and/or identified article (4) remains unconsidered in the case of a change in the at least one parameter of the first machine parameter set.

5. Method according to claim 4, **characterised by** a display of a warning message by means of a display unit (3) of the machine (16, 17, 18) if the article property of an article (4) is outside a predefined article tolerance range, a tracking of an article (4) during the conveying, and an ejection of the article (4) which results in the warning message.

6. Method according to any one of claims 2-5, **characterised by** a display of the setpoint output and/or actual output of the operating unit (8, 38, 39, 78), an output deviation between the actual output of the operating unit (8, 38, 39, 78) and the setpoint output of the operating unit (8, 38, 39, 78), an energy determined as a function of the output deviation over a predefined period of time, and/or a CO2-balance corresponding to the energy, in particular CO2-reduction, and indeed in each case by means of the display unit (3) of the machine (16, 17, 18).

7. Method according to any one of the preceding claims, **characterised in that** the operating unit (8, 38, 39, 78) comprises a heating device (38) and/or a cooling device (39), in particular a heating and/or cooling bar, which is or are brought in each case into thermal operative connection with at least one of the articles (4), and that the process sensor unit (14) identifies the temperature of the heating device (38) and/or of the cooling device (39).

8. Method according to claim 7, **characterised by** a detection of a glue feed rate for a fed article (4) as at least one of the article properties of the fed article (4), and/or a detection of a geometrical size and/or a mass of one of the guided-away articles (4), such as its diameter, length, weight, density and/or humidity, as an article property of the guided-away article (4).

9. Method according to the preceding claim, **characterised in that** the output of the heating device (38) and/or the cooling device (39) is changed if the detected diameter is greater than a maximum admissible diameter.

10. Method according to any one of preceding claims 1-6, **characterised in that** the operating unit (8, 38, 39, 78) comprises at least one conveyor element (48a, 50a, 52a, 56) and a low pressure supply (76, 78, 80, 82), wherein each conveyor element (48a, 50a, 52a, 56) has a plurality of receptacles (58, 70) with a plurality of suction openings for receiving the rod-shaped articles (4) and the low pressure required to hold the rod-shaped articles (4) is generated by means of the low pressure supply (76, 78, 80, 82), at least one of the suction openings is brought into pneumatic operative connection with at least one of the articles (4), and that the operating unit (8, 38, 39, 78) has the at least one process sensor unit (14) which detects the low pressure and/or air volumetric flow generated by the low pressure supply (76, 78, 80, 82) by means of a low pressure sensor (14a) and/or volumetric flow sensor.

11. Method according to claim 10, **characterised by** a detection of a geometrical size and/or mass of the fed article (4), such as its diameter, length and/or weight, as an article property of the fed article (4) by means of the associated article sensor unit (41, 42), a detection of a seat position of the conveyed article (4) on the respective receptacle (58, 70) by means of the associated position sensor unit (66), and a detection of the angular position of the article (4) held by the receptacle (58, 70) of the conveyor element (48a, 50a, 52a, 56) by means of the movement sensor unit (44).

12. Method according to any one of claims 10 or 11, **characterised by** an increase in the setpoint output which brings about the operative connection, in particular of the associated low pressure and/or of the associated air volumetric flow if the longitudinal-axial seat position of the conveyed and/or guided article (4) is outside a predefined seat position tolerance range of a predefined portion of the associated receptacle (58, 70) with suction openings, or if a loss of a fed article (4) is detected from the seat position detected indirectly by the position sensor unit (66).

13. Machine line (2) for producing rod-shaped articles (4) of the tobacco-processing industry, comprising a rod maker (16, 16a, 17, 17a), which has a feed unit for feeding an article filling material (24), a further feed unit for feeding an article wrapper (30), a gluing unit (28) for applying glue onto the article wrapping material (30), a rod forming device (34) to wrap the article wrapping material (30) around the article filling material (24) and a heating device (38) and/or a cooling device (39) for drying and/or hardening the applied glue and as a conveyor (6) of the article (4) has a garniture tape (32) for conveying the glued article wrapping material (30) together with the article filling material (24), a revolving transfer apparatus (20), which has a low pressure supply (76, 78, 80, 82) and at least one conveyor element (52a, 56), for receiving longitudinally-axially conveyed articles (4) and to discharge revolving articles (4) to a transverse-axially discharging conveyor element (48a, 50a), or vice versa, wherein each conveyor element (48a, 50a, 52a, 56) has receptacles (58, 70) with suction openings for receiving rod-shaped articles (4) and the low pressure supply (76, 78, 80, 82) is configured and formed to generate the low pressure required for holding the rod-shaped articles (4), and/or a transverse conveyor unit of an article assembly unit or a filter assembly unit (18, 18a), in each case with a conveyor element (48a, 50a), formed and configured for transverse-axial conveying of rod-shaped articles (4), a rotationally driven driveshaft as well as a drum body assigned to the driveshaft, wherein the drum body has on its outer shell surface receptacles (70) with suction openings for receiving and holding the rod-shaped articles (4) and the low pressure required to hold the rod-shaped articles (4) can be generated by means of a low pressure supply (76, 78, 80, 82), **characterised in that**
the machine line (2) is operated with the heating device (38) and/or the cooling device (39) as an operating unit (8, 38, 39) and/or with the receptacles (58, 70), in particular a filter assembly unit (18, 18a) and/or a transfer apparatus (20), the suction openings and the low pressure supply (76, 78, 80, 82) connected thereto as an operating unit (8, 38, 39), which is adapted to be operated according to a method according to any one of claims 1 to 12, and wherein the machine (16, 17, 18) has at least one control unit (10), at least one movement sensor unit (12), at least one process sensor unit (14, 14a), at least one article sensor unit (41, 42, 43), at least one position sensor unit (66) and a display unit (3) which is formed and configured to carry out the method.

## Revendications

1. Procédé de commande d'un groupe de machines (2) et/ou d'une machine (16, 17, 18) pour la production d'articles (4) de l'industrie de transformation du tabac en forme de bâtonnets, comprenant les étapes consistant à :
a. transporter les articles (4) au moyen d'un convoyeur (6, 32, 48a, 50a, 52a) de la machine (16, 17, 18),
b. provoquer une action thermique ou pneumatique sur les articles (4) transportés au moyen d'au moins une unité active (8, 38, 39, 78) de la machine (16, 17, 18), dans lequel l'unité active (8, 38, 39, 78) est pour ce faire amenée en liaison active thermique ou pneumatique avec ledit au moins un article (4),
c. commander l'unité active (8, 38, 39, 78) au moyen d'une unité de commande (10) de la machine (16, 17, 18),
d. ajuster la puissance de consigne optimale en énergie requise pour la liaison active de l'unité active (8, 38, 39, 78) au moyen de l'unité de commande (10) en dépendance d'un jeu de données de type d'article ou d'un premier jeu de paramètres de machine mis à jour par le jeu de données de type d'article, dans lequel la puissance de consigne optimale en énergie s'entend comme la valeur de la puissance qui est requise pour un fonctionnement sûr de la machine en tenant compte du bilan énergétique,
e. surveiller l'unité active (8, 38, 39, 78) au moyen d'au moins une unité de capteur de mouvement (12),
f. déterminer la puissance réelle de l'unité active provoquant la liaison active en mesurant au moins une grandeur physique de l'unité active (8, 38, 39, 78) pertinente pour la puissance au moyen d'une unité de capteur de processus (14), et
g. mettre à jour le premier jeu de paramètres de machine, notamment des paramètres pertinents et prédéfinissables du jeu de paramètres de machine, sur la base de la puissance réelle déterminée, et
un mode mise au point des machines (16, 17, 18) comprenant les étapes consistant à :
h. détecter les caractéristiques d'article d'un article (4) transporté et/ou acheminé par l'unité active (8, 38, 39, 78) et/ou évacué de l'unité active (8, 38, 39, 78) au moyen d'une unité de capteur de position (66) et/ou d'une unité de capteur d'article (41, 42),
i. déterminer la qualité et/ou le positionnement de l'article (4) transporté, acheminé et/ou évacué sur la base des caractéristiques d'article respectives au moyen de ladite une ou d'une unité de commande (10) supplémentaire,
j. réduire la puissance de consigne par une modification correspondante d'au moins un des paramètres du premier jeu de paramètres de machine jusqu'à ce que la qualité ou le positionnement de l'article sur le dit au moins un convoyeur (6, 32, 48a, 50a, 52a) atteigne une limite prédéfinie, et
k. mettre à jour ledit au moins un paramètre ou le premier jeu de paramètres de machine qui correspond à la puissance de consigne réduite soumise à un facteur et/ou une valeur de sécurité, et
1. sauvegarder un deuxième jeu de paramètres de données qui correspond à une puissance de consigne réduite soumise à un facteur et/ou une valeur de sécurité dans une mémoire de données de la machine (16, 17, 18).

2. Procédé selon la revendication 1, **caractérisé par** une détection d'au moins une caractéristique d'article d'un article (4) alimenté vers l'unité active (8, 38, 39, 78) au moyen d'au moins une unité de capteur d'article (41, 42) supplémentaire ou au moyen d'une transmission d'au moins une caractéristique d'article depuis une unité de la machine (16, 17, 18) agencée en amont ou une mémoire correspondante, et par une modification d'au moins un paramètre du premier jeu de paramètres de machine en dépendance de ladite au moins une caractéristique d'article détectée de l'article (4) alimenté.

3. Procédé selon l'une quelconque des revendications précédentes, **caractérisé par** une détection d'au moins une caractéristique d'article d'un article (4) transporté et/ou acheminé par l'unité active (8, 38, 39, 78) et/ou évacué de l'unité active (8, 38, 39, 78) au moyen de l'unité de capteur de processus (14) et/ou d'une unité de capteur d'article (41, 42) supplémentaire, et par une modification d'au moins un paramètre du premier jeu de paramètres de machine en dépendance de ladite au moins une caractéristique d'article détectée de l'article (4) acheminé et/ou évacué.

4. Procédé selon l'une quelconque des revendications précédentes 1 à 3, **caractérisé par** un enregistrement et/ou un marquage virtuel d'un article (4) alimenté dont au moins une caractéristique d'article est en dehors d'une zone de tolérance d'article prédéfinie pour l'article (4), dans lequel la caractéristique d'article de l'article (4) enregistré et/ou marqué n'est pas prise en compte lors de la modification dudit au moins un paramètre du premier jeu de paramètres de machine.

5. Procédé selon la revendication 4, **caractérisé par** un affichage d'un message d'avertissement au moyen d'une unité d'affichage (3) de la machine (16, 17, 18) quand la caractéristique d'article d'un article (4) est en dehors d'une zone de tolérance d'article prédéfinie, par un suivi d'un article (4) pendant le transport, et par un enlèvement de l'article (4) provoquant le message d'avertissement.

6. Procédé selon l'une quelconque des revendications précédentes 2 à 5, **caractérisé par** un affichage de la puissance de consigne et/ou réelle de l'unité active (8, 38, 39, 78), d'un écart de puissance entre la puissance réelle de l'unité active (8, 38, 39, 78) et la puissance de consigne de l'unité active (8, 38, 39, 78), d'une énergie déterminée sur une période prédéfinie en dépendance de l'écart de puissance, et/ou d'un bilan de CO₂ correspondant à l'énergie, notamment une réduction de CO₂, et ce à chaque fois au moyen de l'unité d'affichage (3) de la machine (16, 17, 18).

7. Procédé selon l'une quelconque des revendications précédentes, **caractérisé en ce que** l'unité active (8, 38, 39, 78) comprend un dispositif de chauffage (38) et/ou un dispositif de refroidissement (39), notamment une nervure de chauffage et/ou de refroidissement, qui est respectivement amené en liaison active thermique avec au moins un des articles (4), et **en ce que** l'unité de capteur de processus (14) détermine la température du dispositif de chauffage (38) et/ou du dispositif de refroidissement (39).

8. Procédé selon la revendication 7, **caractérisé par** une détection d'un débit de la colle pour un article (4) alimenté à titre d'au moins une des caractéristiques d'article de l'article (4) alimenté, et/ou par une détection d'une grandeur géométrique et/ou d'une grandeur dimensionnelle d'un des articles (4) évacués, comme son diamètre, sa longueur, son poids, sa densité et/ou son humidité, à titre d'une caractéristique d'article de l'article (4) évacué.

9. Procédé selon la revendication précédente, **caractérisé en ce que** la puissance du dispositif de chauffage (38) et/ou du dispositif de refroidissement (39) est modifiée quand le diamètre détecté est plus grand qu'un diamètre maximum admissible.

10. Procédé selon l'une quelconque des revendications précédentes 1 à 6, **caractérisé en ce que** l'unité active (8, 38, 39, 78) comprend au moins un élément de convoyage (48a, 50a, 52a, 56) et une alimentation en dépression (76, 78, 80, 82), dans lequel chaque élément de convoyage (48a, 50a, 52a, 56) présente une pluralité de réceptacles (58, 70) avec une pluralité d'ouvertures d'aspiration pour recevoir les articles (4) en forme de bâtonnets et la dépression requise pour maintenir les articles (4) en forme de bâtonnets est générée au moyen de l'alimentation en dépression (76, 78, 80, 82), au moins une des ouvertures d'aspiration étant amenée en liaison active pneumatique avec au moins un des articles (4), et **en ce que** l'unité active (8, 38, 39, 78) présente ladite au moins une unité de capteur de processus (14) qui détecte la dépression et/ou le débit volumique d'air générés par l'alimentation en dépression (76, 78, 80, 82) au moyen d'un capteur de dépression (14a) et/ou d'un capteur de débit volumique.

11. Procédé selon la revendication 10, **caractérisé par** une détection d'une grandeur géométrique et/ou dimensionnelle de l'article (4) alimenté, comme son diamètre, sa longueur et/ou son poids, à titre d'une caractéristique d'article de l'article (4) alimenté au moyen de l'unité de capteur d'article (41, 42) correspondante, par une détection d'une position d'assise de l'article (4) transporté au niveau du réceptacle (58, 70) respectif au moyen de l'unité de capteur de position (66) correspondante, et par une détection de la position angulaire de l'article (4) maintenu par le réceptacle (58, 70) de l'élément de convoyage (48a, 50a, 52a, 56) au moyen de l'unité de capteur de mouvement (44).

12. Procédé selon l'une quelconque des revendications 10 ou 11, **caractérisé par** une augmentation de la puissance de consigne provoquant la liaison active, notamment de la dépression correspondante et/ou du débit volumique d'air correspondant, quand la position d'assise dans la direction longitudinale axiale de l'article (4) transporté et/ou acheminé est en dehors d'une zone de tolérance de position d'assise prédéfinie d'une section prédéfinie du réceptacle (58, 70) correspondant avec des ouvertures d'aspiration, ou quand une perte d'un article (4) alimenté est identifiée par l'unité de capteur de position (66) via la position d'assise détectée.

13. Groupe de machines (2) pour la production d'articles (4) de l'industrie de transformation du tabac en forme de bâtonnets, comprenant une unité de formation du boudin (16, 16a, 17, 17a) qui présente une unité d'alimentation pour alimenter un matériau de remplissage d'article (24), une unité d'alimentation supplémentaire pour alimenter un matériau d'enveloppement d'article (30), un dispositif d'encollage (28) pour appliquer de la colle sur le matériau d'enveloppement d'article (30), un dispositif de formage de boudins (34) pour poser le matériau d'enveloppement d'article (30) autour du matériau de remplissage d'article (24) et un dispositif de chauffage (38) et/ou un dispositif de refroidissement (39) pour sécher et/ou durcir la colle appliquée et, à titre de convoyeur (6) de l'article (4), un ruban bâtonnet-filtre (32) pour transporter le matériau d'enveloppement d'article (30) collé conjointement avec le matériau de remplissage d'article (24), un dispositif de transfert (20) en rotation qui présente une alimentation en dépression (76, 78, 80, 82) et au moins un élément de convoyage (52a, 56) pour recevoir des articles (4) transportés dans la direction longitudinale axiale et pour transférer les articles (4) en rotation à un élément de convoyage (48a, 50a) déportant dans une direction transversale axiale, ou inversement, dans laquelle chaque élément de convoyage (48a, 50a, 52a, 56) présente des réceptacles (58, 70) avec des ouvertures d'aspiration pour recevoir les articles (4) en forme de bâtonnets, et l'alimentation en dépression (76, 78, 80, 82) est agencée et réalisée pour générer la dépression requise pour maintenir les articles (4) en forme de bâtonnets, et/ou une unité d'alimentation transversale d'une unité d'assemblage d'article ou d'une unité de mise en place de filtre (18, 18a), chacune avec un élément de convoyage (48a, 50a), réalisée et agencée pour transporter, dans la direction transversale axiale, des articles (4) en forme de bâtonnets, un arbre d'entraînement entraîné en rotation ainsi qu'un corps du barillet assigné à l'arbre d'entraînement, dans laquelle le corps du barillet présente sur sa surface d'enveloppe extérieure des réceptacles (70) avec des ouvertures d'aspiration pour recevoir et maintenir les articles (4) en forme de bâtonnets et la dépression requise pour maintenir les articles (4) en forme de bâtonnets peut être générée au moyen d'une alimentation en dépression (76, 78, 80, 82), **caractérisée en ce que**
le groupe de machines (2) fonctionne comme unité active (8, 38, 39) avec le dispositif de chauffage (38) et/ou le dispositif de refroidissement (39), et/ou comme unité active (8, 38, 39) avec les réceptacles (58, 70), notamment une unité de mise en place de filtre (18, 18a) et/ou un dispositif de transfert (20), les ouvertures d'aspiration et l'alimentation en dépression (76, 78, 80, 82) associée, qui est adaptée pour fonctionner suivant un procédé selon l'une quelconque des revendications 1 à 12, et dans laquelle la machine (16, 17, 18) présente au moins une unité de commande (10), au moins une unité de capteur de mouvement (12), au moins une unité de capteur de processus (14, 14a), au moins une unité de capteur d'article (41, 42, 43), au moins une unité de capteur de position (66) et une unité d'affichage (3) qui sont réalisées et agencées pour l'exécution du procédé.
